# EUROPEAN PATENT APPLICATION

(11) **EP 4 459 206 A1**
(43) Date of publication of application: **06.11.2024**
(21) Application number: 22913228.7
(22) Date of filing: 28.06.2022
(51) Int. Cl.: F25D 11/02, F25D 17/08, F25D 17/06, F25D 21/14, F25D 21/04, F25D 21/08, F25D 23/00

(54) **REFRIGERATION APPARATUS**

(30) Priority: 30.12.2021 CN 202111653846
(71) Applicant: Hefei Midea Refrigerator Co., Ltd., Hefei, Anhui 230088 (CN); Hefei Hualing Co., Ltd., Hefei, Anhui 230601 (CN); Midea Group Co., Ltd., Foshan, Guangdong 528311 (CN)
(72) Inventor: CUI, Xiangqian, Hefei, Anhui 230601 (CN); YU, Pingxin, Hefei, Anhui 230601 (CN); CUI, Huailei, Hefei, Anhui 230601 (CN); XIAO, Yao, Hefei, Anhui 230601 (CN); SUN, Yuan, Hefei, Anhui 230601 (CN); REN, Zhijie, Hefei, Anhui 230601 (CN); TAN, Yuancheng, Hefei, Anhui 230601 (CN); QU, Sai, Hefei, Anhui 230601 (CN); ZHAO, Yuhang, Hefei, Anhui 230601 (CN)
(74) Representative: RGTH
(86) International application number: PCT/CN2022/101929
(87) International publication number: WO 2023/123939

(57) **Abstract**

The present disclosure relates to the technical field of refrigeration apparatuses, and provides a refrigeration apparatus. The refrigeration apparatus comprises a cabinet body and an air duct assembly. The air duct assembly is located in the cabinet body and divides same into a first compartment and a second compartment, and the air duct assembly comprises a partition plate component, an air duct component, an evaporator and a drainage plate. The partition plate component and the air duct component define a first cavity, a first air inlet, a second air inlet, a first air outlet, and a second air outlet. The first air inlet, the first cavity, the first air outlet, and the first compartment are suitable for communicating with each other, and the second air inlet, the first cavity, the second air outlet, and the second compartment are suitable for communicating with each other. The evaporator and the drainage plate are arranged in the first cavity. The included angle between the evaporator and the horizontal plane is smaller than or equal to a preset angle, or the evaporator is parallel to the horizontal plane. In the refrigeration apparatus provided in the present disclosure, the height space occupied by the evaporator is reduced, and the space occupied by the air duct assembly in the cabinet body is reduced, thus achieving an effect of expanding the capacity of the cabinet body, and providing a large-capacity refrigeration apparatus.

## Description

### CROSS-REFERENCES TO RELATED APPLICATIONS

The present application claims priority to Chinese patent application No. 202111653846.1 filed on December 30, 2021, entitled "Refrigeration Apparatus", which is hereby incorporated by reference in its entirety.

### FIELD

The present application relates to the field of refrigeration apparatus, and in particular, to a refrigeration apparatus.

### BACKGROUND

Consumers have an increasing demand for storage space in a refrigeration apparatus with improved life quality, and a size of the storage space in the refrigeration apparatus (such as a refrigerator) has also become a concern for consumers. How to increase the storage space in the refrigeration apparatus without changing a volume of the refrigeration apparatus has become a research and development direction for technicians. Components of a refrigeration system need to occupy a part of a volume of a cabinet, and a mounting position of the components of the refrigeration system in the cabinet affects the volume of the cabinet and the size of the storage space formed by the cabinet. An evaporator in the refrigeration system is provided at a back side of the refrigeration compartment of the refrigerator, the cabinet has relative large thickness, and storage space in a depth direction of the cabinet is insufficient, resulting in a poor user experience.

### BRIEF SUMMARY

The present application aims to solve at least one of the problems in the related art. An embodiment of the present application provides a refrigeration apparatus in which an air duct assembly is horizontally provided in a cabinet, both a height and a volume of the air duct assembly are reduced, a storage space of the refrigeration apparatus is widened, and the capacity of the refrigeration apparatus is improved.

An embodiment of the present application provides a refrigeration apparatus, comprising:
a cabinet; and
an air duct assembly, where the air duct assembly is located in the cabinet and divides the cabinet into a first compartment and a second compartment, the air duct assembly comprises a partition component, an air duct component, an evaporator and a drain plate, the partition component and the air duct component form a first cavity body, a first air inlet, a second air inlet, a first exhaust port and a second exhaust port, the first air inlet, the first cavity body, the first exhaust port and the first compartment are capable for communication, the second air inlet, the first cavity body, the second exhaust port and the second compartment are capable for communication, the evaporator and the drain plate are provided in the first cavity body, the air duct component supports the drain plate, and an included angle between the evaporator and a horizontal plane is less than or equal to a preset angle, or the evaporator is parallel to a horizontal plane.

In the refrigeration apparatus provided by the embodiments of the present application, the refrigeration apparatus comprises the cabinet and the air duct assembly located in the cabinet, the air duct assembly is horizontally provided in the cabinet to divide the cabinet into two compartments, the air duct assembly comprises the partition component and the air duct component, the evaporator is provided between the partition component and the air duct component and is horizontally provided in the air duct component, and the included angle between the evaporator and the horizontal plane is less than or equal to the preset angle, or the evaporator is parallel to the horizontal plane. The height of the evaporator may be limited by limiting the included angle between the evaporator and the horizontal plane to the preset angle. When the height of the evaporator is reduced, the space occupied by the air duct assembly in the cabinet is reduced, the capacity of the cabinet is enlarged to increase the capacity of the refrigeration apparatus.

In an embodiment, the drain plate is provided with a water guide portion recessed downwardly relative to a top surface of the drain plate, and a fourth included angle is formed between an extension direction of the water guide portion and an air outflow direction of the air duct assembly. The air in the air duct assembly may flow along the extension direction of the water guide portion, which delays the air from flowing out along the air outflow direction, prolongs heat exchange time of the air in the air duct assembly, and optimizes a heat exchange effect.

In an embodiment, the drain plate is provided with a drain portion recessed downwardly relative to the top surface of the drain plate, the drain portion is provided with an outlet, and the drain portion communicates with the water guide portion. The extension direction of the drain portion is not limited, and the water received by the drain plate may be discharged along the outlet to ensure heat exchange and drainage effects.

In an embodiment, a bottom of the water guide portion is inclined in a first direction toward the drain portion, a sixth included angle is formed between the first direction and the top surface of the drain plate, and a recessed depth of the water guide portion toward the drain portion gradually increases. The water in the water guide portion conveniently flows into the drain portion, which improves drainage efficiency and ensures drainage effect.

In an embodiment, a bottom of the drain portion is inclined in a second direction toward the outlet, a seventh included angle is formed between the second direction and the top surface of the drain plate, and a recessed depth of the drain portion toward the outlet gradually increases. The water in the drain portion is conveniently discharged from the drain plate.

In an embodiment, the air duct component is provided with a water guide, a first side of the water guide faces the outlet and communicates with the outlet, a second side of the water guide is provided with a drain port, and the water guide is inclined downward in a direction away from the outlet and the water guide guides water.

In an embodiment, the water guide portion extends to an end of the drain plate and forms an opening, and a first drain component is provided at a side where the opening is located. The opening of the water guide portion may play a role in draining water.

In an embodiment, the refrigeration apparatus further comprises a fan, where a first included angle is formed between a rotation axis of the fan and a vertical direction. The fan is provided horizontally to reduce the height space occupied by the fan and the space occupied by the air duct assembly.

In an embodiment, the refrigeration apparatus further comprises a fan and a fan cover plate, where the fan is provided at a side of the evaporator, the fan cover plate is located between the fan and the evaporator, an inlet of the fan communicates with the first cavity body through a vent opening of the fan cover plate, and the fan cover plate is provided with a first exhaust port and a second exhaust port. A mounting mode of the fan is not limited here, and the fan may be provided horizontally or vertically.

In an embodiment, the cabinet comprises a box liner body, the box liner body is provided with a first channel, a cavity is formed inside the partition component, a second channel is provided at a side of the partition component, and the second channel, the cavity and the first channel communicate to form foam space. The air duct component and the box liner body are foamed integrally, which may solve a problem of a mounting clearance between the air duct component and the box liner body, and ensure independence of the first compartment and the second compartment.

In an embodiment, the partition component comprises:
a first plate body; and
a second plate body, where the second plate body is provided below the first plate body, the second plate body and the first plate body enclose the cavity, an edge of the second plate body is recessed downwardly to form a recess communicating with the cavity, and the recess communicates with the second channel, which may optimize the foaming process and improve production efficiency.

In an embodiment, at least one of the partition component and the air duct component is provided with a partition portion, and an orthographic projection of the partition portion at the first air inlet covers a local area of the first air inlet, the orthographic projection is located at an end of the first air inlet close to the second air inlet, the partition portion and the first air inlet are spaced by a preset distance, part of the inflow air of the first air inlet is guided, the amount of cross-contact air in the inflow air of the two air inlets is reduced, the amount of frost at the cross-contact position of the inflow air is reduced, the defrost interval is extended, and the defrost energy consumption is reduced.

In an embodiment, the second air inlet is provided at a front side of the air duct component, and a front side of the partition component is provided with a mount portion covering the second air inlet. In case of ensuring a ventilation effect of the second air inlet, the second air inlet is hidden to prevent debris from entering the second air inlet, which also ensure integrity of a front-end structure of the air duct assembly.

In an embodiment, the first air inlets are provided at a left side and a right side of the air duct assembly and close to the front side of the air duct assembly.

In an embodiment, the first compartment is located above the second compartment, the first compartment is a refrigeration compartment, and the second compartment is a freezer compartment.

Additional aspects and advantages of the present application are set forth in part in the description which follows and, in part, will be apparent from the description, or may be learned through practice of the present application.

### BRIEF DESCRIPTION OF THE DRAWINGS

In order to illustrate the solutions disclosed in the embodiments of the present application more clearly, the drawings used in the description of the embodiments are briefly described below. The drawings in the following description are only some embodiments of the present application, and other drawings may be obtained according to these drawings without any creative work for those skilled in the art.
FIG. 1 is a schematic structural diagram of a refrigeration apparatus according to an embodiment of the present application, in which a door body is not shown.
FIG. 2 is a partial schematic structural diagram of a refrigeration apparatus according to an embodiment of the present application, in which a partial structure of the cabinet and a box liner body are not shown;
FIG. 3 is a partially enlarged schematic structural diagram of A in FIG. 2;
FIG. 4 is a partial schematic structural diagram of an air duct assembly according to an embodiment of the present application;
FIG. 5 is a partial exploded schematic diagram of an air duct assembly according to an embodiment of the present application;
FIG. 6 is an exploded schematic structural diagram of an air duct assembly according to an embodiment of the present application;
FIG. 7 is a partial top view of an air duct assembly according to an embodiment of the present application, in which components above a drain plate are not shown;
FIG. 8 is a cross-sectional schematic structural diagram of FIG. 7 at B-B;
FIG. 9 is a partial side-view schematic structural diagram of an air duct assembly according to an embodiment of the present application;
FIG. 10 is a partial schematic structural diagram of another refrigeration apparatus according to an embodiment of the present application, a main difference between FIG. 10 and FIG. 2 is that a structure of the drain plate is different, and a door body is not shown in FIG. 10;
FIG. 11 is a partially enlarged schematic structural diagram of a C part in FIG. 10;
FIG. 12 is a partial schematic structural diagram of another duct assembly according to an embodiment of the present application, and components above a drain plate are not shown;
FIG. 13 is a partial exploded schematic structural diagram of another duct assembly according to an embodiment of the present application;
FIG. 14 is a longitudinal cross-sectional schematic structural diagram of a third duct assembly according to an embodiment of the present application, in which a position of a fan is shown;
FIG. 15 is a partial schematic structural diagram of a third duct assembly according to an embodiment of the present application, and components above the drain plate are not shown;
FIG. 16 is a partial exploded schematic structural diagram of a third air duct assembly according to an embodiment of the present application;
FIG. 17 is a schematic structural diagram of a third refrigeration apparatus according to an embodiment of the present application, and a door body is not shown;
FIG. 18 is a longitudinal cross-sectional schematic structural diagram of a third refrigeration apparatus according to an embodiment of the present application;
FIG. 19 is a partially enlarged schematic structural diagram of a D part in FIG. 18;
FIG. 20 is an exploded schematic structural diagram of a fourth air duct assembly according to an embodiment of the present application;
FIG. 21 is a bottom schematic structural diagram of a fourth air duct assembly according to an embodiment of the present application;
FIG. 22 is a three-dimensional schematic structural diagram of a drain plate according to an embodiment of the present application;
FIG. 23 is a top schematic structural diagram of a drain plate according to an embodiment of the present application;
FIG. 24 is a cross-sectional schematic structural diagram of FIG. 23 at E-E;
FIG. 25 is a cross-sectional schematic structural diagram of FIG. 23 at F-F;
FIG. 26 is a schematic structural diagram of a second plate body and its mounting state in a partition component of an air duct assembly according to an embodiment of the present application;
FIG. 27 is a schematic structural diagram of another second plate body and its mounting state in a partition component of an air duct assembly according to an embodiment of the present application;
FIG. 28 is a schematic structural diagram of a first inner recess and a second inner recess of a second plate body in the partition component of an air duct assembly according to an embodiment of the present application;
FIG. 29 is a schematic structural diagram of a third inner recess of a second plate body in a partition component of an air duct assembly according to an embodiment of the present application;
FIG. 30 is a three-dimensional schematic structural diagram of a mounting state of an evaporator and a drain plate according to an embodiment of the present application;
FIG. 31 is a side-view schematic structural diagram of a mounting state of an evaporator and a drain plate according to an embodiment of the present application;
FIG. 32 is a first exploded schematic diagram of an evaporator, a drain plate and a heat member according to an embodiment of the present application;
FIG. 33 is a second exploded schematic diagram of an evaporator, a drain plate and a heat member according to an embodiment of the present application;
FIG. 34 is a schematic diagram of a mounting state of an evaporator, a drain plate and a second heater according to an embodiment of the present application;
FIG. 35 is an exploded schematic diagram of an evaporator, a drain plate and a second heater according to an embodiment of the present application;
FIG. 36 is a schematic diagram of a mounting state of an evaporator, a drain plate and an air duct component according to an embodiment of the present application;
FIG. 37 is a schematic structural diagram of a first support portion in an air duct component according to an embodiment of the present application;
FIG. 38 is a partially enlarged schematic structural diagram of an H part in FIG. 37;
FIG. 39 is a top schematic structural diagram of a partition component according to an embodiment of the present application;
FIG. 40 is a cross-sectional schematic structural diagram of FIG. 39 at A-A; and
FIG. 41 is a schematic structural diagram of an exploded state of a box liner according to an embodiment of the present application.

### Reference numerals:

100: drain plate; 110: drain portion; 111: first drain portion; 112: second drain portion; 113: second flow guide surface; 114: outlet; 115: third drain portion; 120: first water guide portion; 121: first flow guide surface; 123: first water guide area; 124: second water guide area; 130: second water guide portion; 131: third flow guide surface; 140: third water guide portion; 141: fourth flow guide surface; 150: turnup; 151: position portion; 160: heat member; 170: opening;
200: air duct assembly; 201: first air inlet; 202: second air inlet; 203: first exhaust port; 204: second exhaust port;
210: partition component; 211: first plate body; 212: second plate body; 2121: first inner recess; 2122: first guide surface; 2123: first top surface; 2124: second inner recess; 2125: second guide surface; 2126: second top surface; 2127: third inner recess; 2128: third top surface; 2129: third guide surface; 213: first thermal insulation layer; 214: third plate body; 215: third wall plate; 216: cavity; 217: recess; 218: second channel;
220: air duct component; 221: second thermal insulation layer; 222: first support portion; 2221: partition portion; 2222: guide surface; 22221: curved surface portion; 22222: plane portion; 2223: guide plate; 2224: second support slope; 2225: second support groove; 223: water guide; 2231: third drain pipe; 224: third thermal insulation layer; 225: second support portion; 226: heat component;
230: evaporator; 231: first heater; 232: second heater; 233: heat exchange tube; 234: heat dissipation fin; 2341: first heat dissipation fin; 2342: second heat dissipation fin; 23421: ventilation portion; 2343: mount hole;
240: fan hood; 241: first hood body; 2411: flow guide surface; 242: second hood body; 2421: first water guide channel; 2422: partition portion; 2423: third drain port; 2424: first air guide portion; 2425: second air guide portion; 2426: second mount column; 2427: divider plate; 2428: water collect portion; 243: fan cover plate; 2431: third air guide portion; 2432: fourth air guide portion; 244: vent opening;
250: first damper;
260: first drain component; 262: first drain port; 263: first drain pipe; 264: first wall plate; 265: second wall plate;
270: fan; 271: fan mount seat;
281: second cavity body; 282: first cavity body;
290: second drain component; 291: second drain pipe;
300: box liner body; 312: first channel; 311: snap slot; 313: position slot;
400: cabinet; 410: first compartment; 420: second compartment; 430: air return component;
431: air return pipe; 432: main air return outlet; 433: auxiliary air return outlet;
α₁: first included angle; α₂: second included angle; α₃: third included angle;
θ₂: sixth included angle; and θ₃: seventh included angle.

### DETAILED DESCRIPTION

The following implementations of the present application are described in further detail in conjunction with the accompanying drawings and embodiments. The following embodiments are used to illustrate the present application, but are not intended to limit the scope of the present application.

In the description of the present application, it should be noted that, the orientation or positional relations specified by terms such as "central", "longitudinal", "lateral", "up", "down", "front", "back", "left", "right", "vertical", "horizontal", "top", "bottom", "inner", "outer" and the like, are based on the orientation or positional relations shown in the drawings, which is merely for convenience of description of the present application and to simplify description, but does not indicate or imply that the stated devices or components must have a particular orientation and be provided and operated in a particular orientation, and thus it is not to be construed as limiting the present application. Furthermore, the terms "first", "second", "third" and the like are only used for descriptive purposes and should not be construed as indicating or implying a relative importance. In addition, in the description of the present application, unless otherwise specified, "multiple", "multiple pieces", and "multiple groups" mean two or more.

In the description of the embodiments of the present application, it should be noted that unless explicitly specified and defined otherwise, the terms "connected to" and "connected" shall be understood broadly, for example, it may be either fixedly connected or detachably connected, or can be integrated; it may be either mechanically connected, or electrically connected; it may be either directly connected, or indirectly connected through an intermediate medium. The specific meanings of the terms above in the present application can be understood by a person skilled in the art in accordance with specific conditions.

In the embodiments of the present application, unless otherwise expressly specified and defined, a first feature is "on" or "under" a second feature can refer to that the first feature is directly contacted with the second feature, or the first feature is indirectly contacted with the second feature through an intermediate medium. In addition, the first feature is "on", "above" and "over" the second feature can refer to that the first feature is directly above or obliquely above the second feature, or simply refer to that the level height of the first feature is higher than that of the second feature. A first feature is "under", "below" and "beneath" a second feature can refer to that the first feature is directly below or obliquely below the second feature, or simply refer to that the level height of the first feature is lower than that of the second feature.

In the description of this specification, description with reference to the terms "an embodiment", "some embodiments", "an example", "specific example", "some examples" and the like, refers to that specific features, structures, materials or characteristics described in combination with an embodiment or an example are comprised in at least an embodiment or example according to the embodiments of the present application. In this specification, schematic representations of the above terms are not necessarily directed to a same embodiment or example. Furthermore, the particular features, structures, materials or characteristics described can be combined in any suitable manner in any one or more embodiments or examples. In addition, those skilled in the art may combine the different embodiments or examples described in this specification, as well as the features of the different embodiments or examples, without conflicting each other.

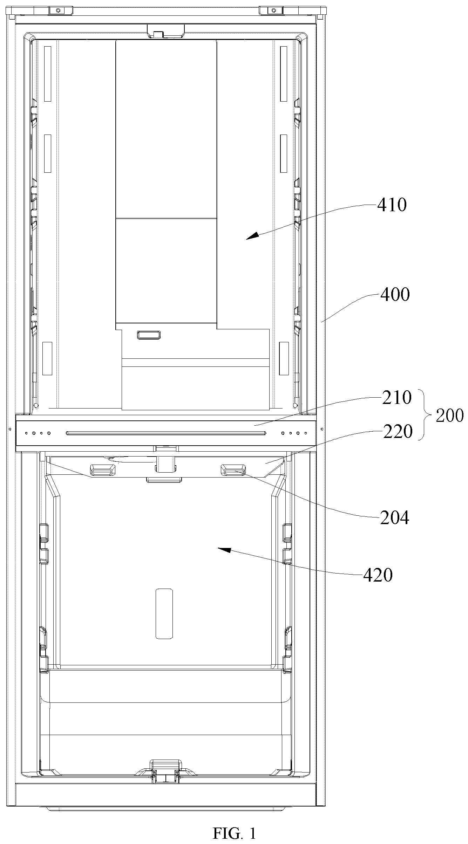

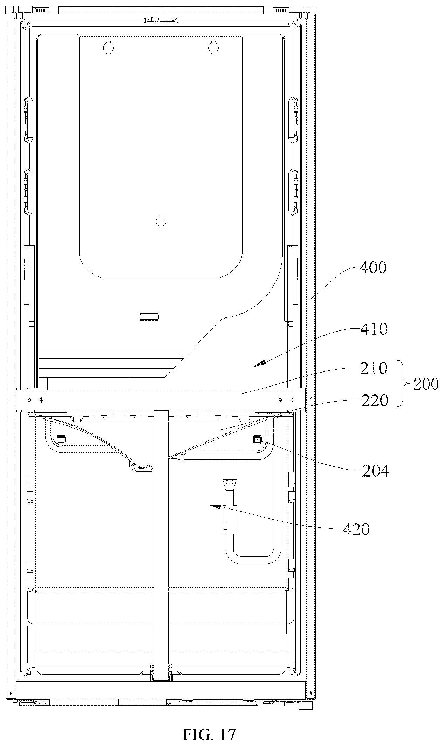

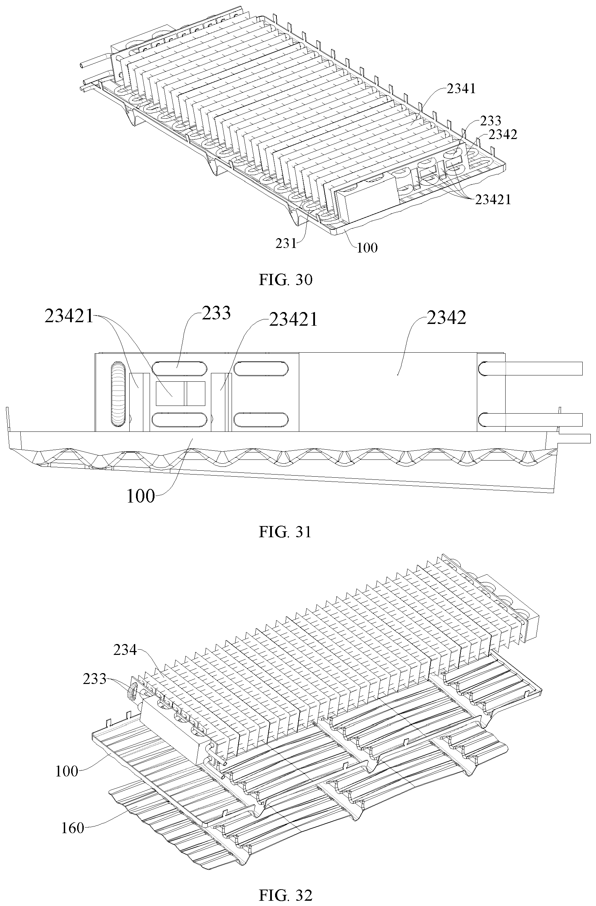

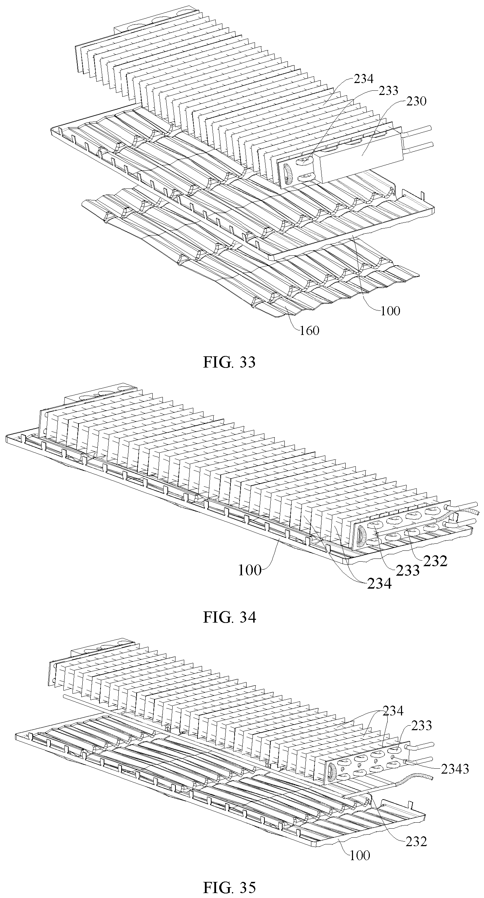

An embodiment of the present application, in combination with FIG. 1 to FIG. 41, provides a refrigeration apparatus, comprising a cabinet 400, and the cabinet 400 comprises a box liner.

The refrigeration apparatus may be a variety of apparatuses such as refrigerators, freezers, display cabinets, sales cabinets or wine cabinets. The refrigeration apparatus may be used for refrigeration or freezing.

In the following embodiments, directions of front, back, left, right, up and down correspond to the directions of the refrigeration apparatus.

An embodiment of the present application further provides a box liner comprising a box liner body 300 and an air duct assembly 200, space inside the box liner body 300 is divided by the air duct assembly 200 into a first compartment 410 and a second compartment 420 that are independent of each other.

The air duct assembly 200 may play a role in dividing the compartments, and may also play a role in circulating air. In an embodiment, in order to ensure the independence of the first compartment 410 and the second compartment 420, the mount position of the air duct assembly 200 and the box liner body 300 needs to be sealed to avoid air circulation between the first compartment 410 and the second compartment 420.

An embodiment of the present application further provides an air duct assembly 200, which divides entire space in the box liner body 300 into the first compartment 410 and the second compartment 420, or divides local space in the box liner body 300 into the first compartment 410 and the second compartment 420.

The air duct assembly 200 supplies air to the first compartment 410 and the second compartment 420 independently, and the first compartment 410 and the second compartment 420 may have the same or different functions. When the first compartment 410 and the second compartment 420 have different functions, that is, the ambient temperatures in the first compartment 410 and the second compartment 420 are different, the first compartment 410 may be a refrigeration compartment, and the second compartment 420 may be a freezer compartment, the frequency at which the air duct assembly 200 supplies air to the refrigeration compartment is lower than the frequency at which the air duct assembly 200 supplies air to the freezer compartment. When the first compartment 410 and the second compartment 420 have the same function, such as both being refrigeration compartments, the ambient temperatures of the two refrigeration compartments may be the same or different. In this case, the frequency at which the air duct assembly 200 supplies air to the two refrigeration compartments may be the same or different, which may be set as required. The functions of the compartments divided by the air duct assembly 200 are not limited to refrigeration and freezing, the compartments may also be variable temperature compartments or other functional compartments, which may be set as required.

When the cabinet 400 is connected to the door body, and the door body is in a position closing the cabinet 400, the first compartment 410 and the second compartment 420 are two hermetic and independent space; when the door is in a position opening the cabinet 400, items may be taken in and out of at least one of the first compartment 410 and the second compartment 420.

The number of the air duct assemblies 200 in the refrigeration apparatus may be set as required.

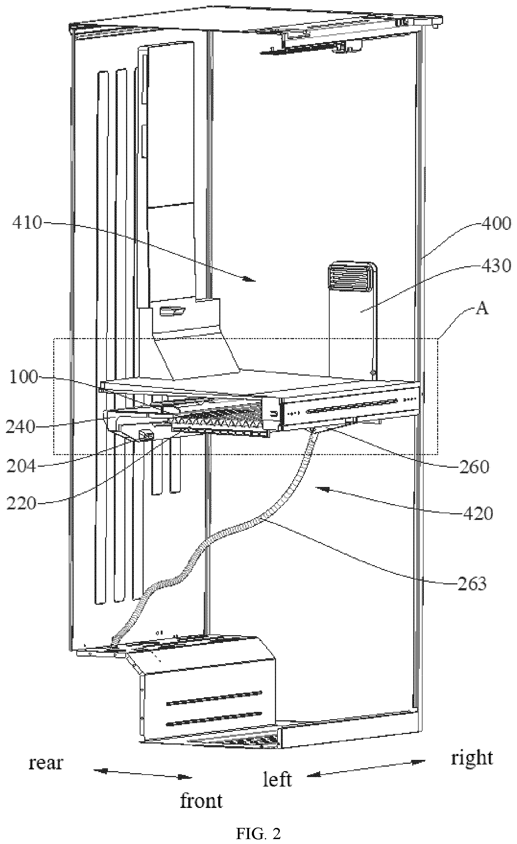

In an embodiment, as shown in FIG. 2, FIG. 3, FIG. 10, FIG. 11 and FIG. 17 to FIG. 20, the air duct assembly 200 comprises a partition component 210, an air duct component 220, an evaporator 230 and a drain plate 100. The partition component 210 is provided above the air duct component 220, the partition component 210 and the air duct component 220 form a first cavity body 282, an air inlet suitable for communicating with the first cavity body 282 and an exhaust port suitable for communicating with the first cavity body 282, the evaporator 230 and the drain plate 100 are provided in the first cavity body 282, and the drain plate 100 is provided below the evaporator 230. The partition component 210 and the air duct component 220 jointly form the air inlet, the first cavity body 282 and the exhaust port which communicate together, and the air entering the air duct assembly 200 is discharged after heat exchange.

As shown in FIG. 1 and FIG. 2, the partition component 210 is connected to the box liner body 300, and the connection between the partition component 210 and the box liner body 300 is sealed to divide the space in the box liner body 300 into a first compartment 410 and a second compartment 420 that are independent to each other. The first cavity body 282 between the partition component 210 and the air duct component 220 is used for mounting the evaporator 230, the drain plate 100, a heater structure for defrosting and other components to meet the heat exchange requirement of the first compartment 410 and the second compartment 420.

The air inlet of the air duct assembly 200 is divided into a first air inlet 201 and a second air inlet 202, and the exhaust port of the air duct assembly 200 is divided into a first exhaust port 203 and a second exhaust port 204. The first air inlet 201, the first cavity body 282, the first exhaust port 203 and the first compartment 410 communicate to form a first circulation path, and the second air inlet 202, the first cavity body 282, the second exhaust port 204 and the second compartment 420 communicate to form a second circulation path. At least one of the first circulation path and the second circulation path communicates to supply air to the first compartment 410 and the second compartment 420. The number and position of the first air inlet 201, the second air inlet 202, the first exhaust port 203 and the second exhaust port 204 are not limited.

As shown in FIG. 1 and FIG. 2, the first compartment 410 is located above the air duct assembly 200, the first compartment 410 is provided as a refrigeration compartment, the second compartment 420 is located below the air duct assembly 200, and the second compartment 420 is provided as a freezer compartment, that is, the first compartment 410 is provided above the second compartment 420, and the air duct assembly 200 is provided with a first exhaust port 203 facing upward and a second exhaust port 204 facing downward; a first damper 250 is provided at the first exhaust port 203 for opening and closing; and a second damper is provided at the second exhaust port 204 for controlling opening and closing. The air duct assembly 200 is provided with a first air inlet 201 and a second air inlet 202 at the front end thereof, the first air inlet 201 communicates with the air return duct of the refrigeration compartment, the first air inlet 201 is provided at the left and right sides of the air duct assembly 200, the second air inlet 202 communicates with the freezer compartment, and the second air inlet 202 is provided at the front side or the bottom side of the air duct assembly 200.

In an embodiment, both the first air inlet 201 and the second air inlet 202 are close to a first end of the air duct assembly 200, both the first exhaust port 203 and the second exhaust port 204 are also close to a second end of the air duct assembly 200, and the air inlets and the exhaust ports are generally at opposite ends, such as the air inlets close to the front end and the exhaust ports close to the rear end, but the aforementioned positions are not limited, and the air inlets may also be close to the left end or the right end. The positions of the air inlets and the exhaust ports are flexible and may be selected as required.

In some cases, the first air inlet 201 is provided at a first side of the first cavity body 282, and the second air inlet 202 is provided at a second side of the first cavity body 282. The first side is adjacent to the second side, that is, the first air inlet 201 and the second air inlet 202 are provided at different sides of the air duct assembly 200. Inflow air of the first air inlet 201 and inflow air of the second air inlet 202 intersect in the first cavity body 282. When the first air inlet 201 and the second air inlet 202 have different inflow air temperatures (that is, the ambient temperatures of the first compartment 410 and the second compartment 420 are different), the intersection of the inflow air of the first air inlet 201 and the inflow air of the second air inlet 202 is prone to frost due to contact heat exchange. The first air inlet 201 and the second air inlet 202 are provided at different sides of the air duct assembly 200. In an embodiment, the first air inlet 201 and the second air inlet 202 form an included angle.

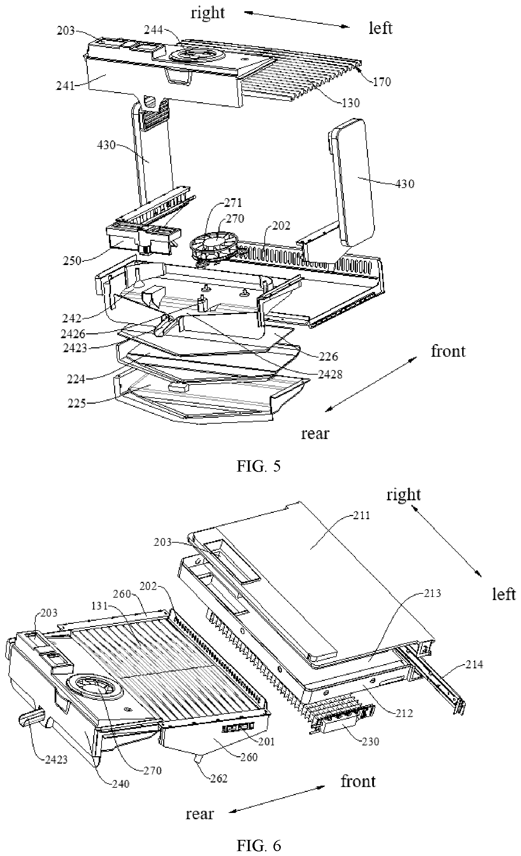

As shown in FIG. 6, the first side is at least one of a left side and a right side, and the second side is a front side.

An embodiment of the drain plate 100 is provided in combination with FIG. 1 to FIG. 16 and FIG. 20 to FIG. 25 as follows, and the structure of the drain plate 100 is described by taking the drain plate 100 mounted inside the above-mentioned air duct assembly 200 as an example. It is not limited that the drain plate 100 is mounted inside the above-mentioned air duct assembly 200, and other structures suitable for mounting the drain plate 100 in the following embodiments may also mount the following drain plate 100.

An embodiment of the present application, in combination with FIG. 1 to FIG. 7, further provides a drain plate 100. The drain plate 100 is provided with a water guide portion that is recessed downwardly relative to a top surface of the drain plate 100, and the water guide portion extends to two sides of a preset surface to an edge of the drain plate 100, openings 170 are formed at an edge of the drain plate 100, the openings 170 face the side where the first air inlet 201 is provided, and part of the inflow air of the first air inlet 201 passes through the openings 170 and flows into the first cavity body 282 along the extension direction of the water guide portion.

The function of the first air inlet 201 here is not limited. The first air inlet may communicate with the refrigeration compartment, and the water guide portion guides the refrigerating air; or the water guide portion communicates with the freezer compartment, and may also guide the freezing air. The drain plate is designed as an inverted V-shaped structure by providing the water guide portion, part of the refrigerating air return enters the evaporator 230 through the V-shaped structure space to solve the problem of condensation of air return in the refrigerator, which reduces the contact between the refrigeration air return and the freezing air return, reduces the aggregation and mixing condensation with the freezing air return, causes the frost to be more evenly distributed in the evaporator, and reduces blockage of the freezing air return by the frost.

Part of the inflow air of the first air inlet 201 passes through the openings 170 and is introduced into the first cavity body 282 along the extension direction of the water guide portion, part of the inflow air of the first air inlet 201 can be branched, the amount of air intersecting with the inflow air of the second air inlet 202 is reduced, frost condensed due to the contact between the inflow air of the first air inlet 201 and the inflow air of the second air inlet 202 is further reduced, the interval between two defrosting is prolonged, the number of defrosting is decreased, and both the power consumption required for defrosting and the power consumption of the refrigeration apparatus are reduced.

The water guide portion is recessed downwardly relative to the top surface of the drain plate 100, the drain plate 100 forms a groove, and a part of the inflow air of the first air inlet 201 may flow along the groove to the inside of the first cavity body 282, and the water guide portion may guide the air therein.

An included angle is formed between the preset surface and the extension direction of the water guide portion, and the preset surface extends from the air inlets to the exhaust ports. If the air inlets are located at the front end of the air duct assembly 200 and the exhaust ports are located at the rear end of the air duct assembly 200, the preset surface extends from front to rear. The extension trend of the preset surface is from front to rear, the preset surface may be extended obliquely, and the position of the preset surface may be selected as required.

In some cases, the preset surface may be a symmetrical surface of the drain plate 100, and the water guide portions are symmetrically provided at two sides of the preset surface, the drain plate 100 has a symmetrical structure and the structural stability of the drain plate 100 is better.

The preset surface is not limited to a symmetrical surface, and the openings 170 may be provided at one side or two sides of the drain plate 100. When the openings 170 are provided at one side of the drain plate 100, the preset surface may be a side surface of the drain plate 100, which is provided at an opposite side of the first air inlet 201. When the openings 170 are provided at two sides of the drain plate 100, the preset surface may be any surface extending from the front to the back.

The openings 170 of the drain plate 100 may play a role in guiding part of the inflow air of the air inlet 201, and the opening 170 of the drain plate 100 may also play a role in drainage.

When the openings 170 of the drain plate 100 plays a role in branching a portion of the inflow air, the recessed depth of the water guide portion relative to the top surface of the drain plate 100 is not limited.

In some cases, the recessed depth of the water guide portion gradually increases toward the direction of the openings 170, and the water guide portion having the above structure may be referred to as a second water guide portion 130. That is, the second water guide portion 130 has a larger depth at an end facing the openings 170, which helps to guide the air to flow therein. When the evaporator 230 is provided above the drain plate 100, the depth of the second water guide portion 130 gradually increases, which can also increase the distance between the evaporator 230 and the drain plate 100, appropriately widen the flow space of the air, and help the defrosted water received by the drain plate 100 to drain from the openings 170.

The depth of the second water guide portion 130 gradually increases toward an end of the openings 170, which may be a continuous increase or a step-like increase.

In an embodiment, a bottom of the second water guide 130 is inclined along a first preset direction towards the openings 170, and a first preset included angle is formed between the first preset direction and the top surface of the drain plate 100. That is, the bottom surface of the second water guide portion 130 is an inclined surface extending downward along the first preset direction, which helps the air flow into the first cavity body 282 and also facilitates drainage.

The first preset direction is a direction that forms the first preset included angle with the top surface and is inclined downward toward the openings 170 along the preset surface. The size of the first preset angle may be selected as required.

In order to reduce the size of the drain plate 100 in the height direction, the first preset included angle may be an angle less than or equal to 7°, both the drainage effect and air guide effect may meet the requirement, the height dimension of the air duct assembly 200 may be reduced, and the height space occupied by the air duct assembly 200 in the cabinet 400 is decreased, which helps to increase the compartment space in the cabinet 400 to provide a large-capacity refrigeration apparatus.

In some cases, the first preset included angle is set to 3°, which may meet the drainage requirement of the drain plate 100 and may also fully reduce the height of the drain plate 100 to drain in a small angle. The first preset included angle may also be set to 1°, 2°, 4°, 5°, 6° or 7°.

The recessed depth of the second water guide portion may remain unchanged (which is not shown in the figures). The recessed depth of the second water guide portion remains consistent, which may also play the role in guiding air and draining water.

In an embodiment, the water guide portion comprises a flow guide surface provided along the extension direction of the water guide portion, and the flow guide surface approaches the opposite side in a direction from the top surface to the bottom surface of the drain plate 100. That is, the second water guide portion 130 is provided with a third flow guide surface 131 along its extension direction, and the third flow guide surface 131 approaches the opposite side in the direction from the top surface to the bottom surface of the drain plate 100. The third flow guide surface 131 is a slope inclined to its opposite side.

The defrosted water received by the top surface of the drain plate 100 and the third flow guide surface 131 may fall into the bottom of the water guide portion along the guide direction of the third flow guide surface 131, and the defrosted water gathers in the water guide portion and the water in the water guide portion is discharged.

The side surface opposite to the third flow guide surface 131 may be a vertically arranged surface or also a flow guide surface, which may be selected as required. As shown in FIG. 5 and FIG. 6, both opposite side surfaces of the second water guide portion 130 are the third flow guide surfaces 131.

As shown in FIG. 5 to FIG. 7, a plurality of second water guide portions 130 are provided at each side of the preset surface of the drain plate 100, the plurality of second water guide portions 130 are provided in parallel, and a plurality of openings 170 are formed at two sides of the drain plate 100, and part of the inflow air of the first air inlet 201 may enter the first cavity body 282 along the plurality of openings 170.

At a preset height position, the width of the second water guide portion 130 gradually decreases toward the direction of the openings 170, and the water received in the second water guide portion 130 is collected toward the direction of the openings 170.

In combination with FIG. 1 to FIG. 7 and the above content, no drain portion 110 may be provided at the drain plate 100 having the second water guide portion 130.

In combination with FIG. 1 to FIG. 16 and FIG. 20 to FIG. 25, an embodiment of the present application further provides another drain plate 100. The drain plate 100 is provided with a water guide portion that is recessed relative to the top surface of the drain plate 100, and a fourth included angle is formed between the extension direction of the water guide portion and the air outflow direction above the drain plate 100.

When both the drain plate 100 and the evaporator 230 are provided in the first cavity body 282 of the air duct assembly 200, the air enters the first cavity body 282 from the air inlets of the air duct assembly 200 and flows toward the exhaust ports, and the air in the first cavity body 282 flows in the space between the drain plate 100 and the evaporator 230 and in the space inside the evaporator 230. When the air flows between the drain plate 100 and the evaporator 230, the fourth included angle is formed between the water guide portion and the air outflow direction, which may suppress the air from flowing directly from the water guide portion to the exhaust ports to prolong the time that the air stays in the first cavity body 282, and the air may fully contact with the evaporator 230 and exchange heat. The heat-exchanged air is then discharged from the exhaust ports, which helps to improve the heat exchange efficiency.

The air outflow direction is a direction from the air inlet to the exhaust port. In some cases, only one air inlet and one exhaust port are provided, which is a one-to-one correspondence, and one air outflow direction is formed. In some cases, at least one of the air inlet or the exhaust port is provided in multiples, and a plurality of air outflow directions may be formed. An included angle is formed between the extension direction of the water guide portion and at least one air outflow direction, the heat exchange efficiency of the air may be ensured in one direction. An included angle is formed among the extension direction of the water guide portion and all air outflow directions, the air in multiple flow paths may be ensured to effectively exchange heat and the heat exchange efficiency is ensured. The air inlets are generally provided at the front end of the air duct assembly 200, and the exhaust ports are generally provided at the rear end of the air duct assembly 200, and the air outflow direction may be from front to rear.

When the air inlets are divided into a first air inlet 201 and a second air inlet 202, the second air inlet 202 is provided in front of the air duct assembly 200, and the exhaust port is provided behind the air duct assembly 200, the communication path between the second air inlet 202 and the exhaust port forms a first air outflow direction, and the second air inlet 202 corresponds to the lower position of the evaporator 230, and the air flows from bottom to top and from front to rear.

In the drain plate 100 of this embodiment, an included angle is formed between the extension direction of the water guide portion and the first air outflow direction, that is, the included angle is formed between extension direction of the water guide portion and the front-back direction. The first air inlet 201 may be at least provided at one of the left and right sides of the air duct assembly 200, the communication path between the first air inlet 201 and the exhaust port forms a second air outflow direction, and an included angle is also formed between the extension direction of the water guide portion and the second exhaust ports direction. Both the included angle formed between the extension direction of the water guide portion and the first air outflow direction and the included angle formed between the extension direction of the water guide portion and the second air outflow direction may be referred to as the fourth included angle, and the specific angle values may be the same or different.

The extension direction of the water guide portion may be a straight path or a curved path. When the extension path of the water guide portion is the straight path, the path from a first end of the water guide portion away from the drain portion 110 to a second end of the water guide portion communicating with the drain portion 110 is the extension path. When the extension path of the water guide portion is the curved path, the water guide portion having the curved path may have a plurality of ends communicating with the drain portion 110, and the curved path may be a broken line path formed by communicating multiple straight paths, or the curved path is a curved line with one or more curvature radii, and the shape of the curved path can be set as required. One or more included angles may be formed between the extension direction of the water guide portion and the air outflow direction, that is, the fourth included angle may be one or more angle values, which may be set as required.

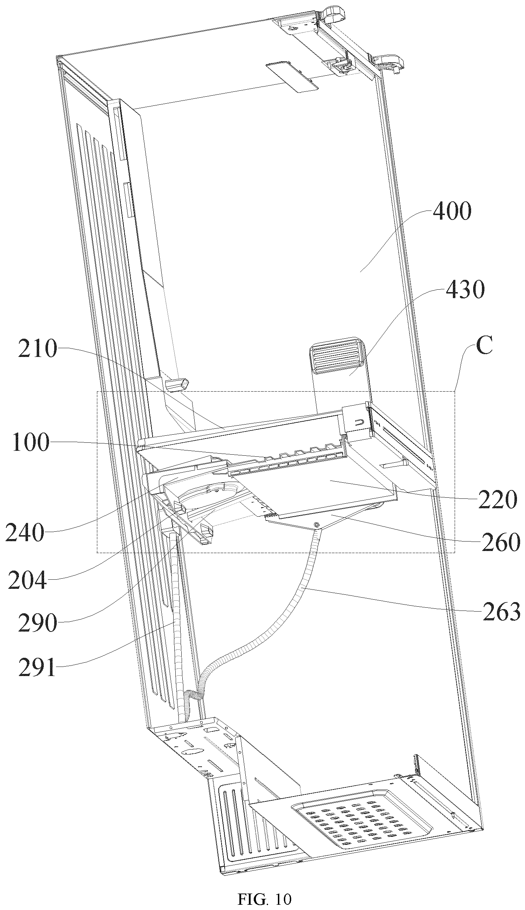

In combination with FIG. 10 to FIG. 25, an embodiment of the present application further provides another drain plate 100. The drain plate 100 is provided with a drain portion 110 and a water guide portion, the drain portion 110 is provided with an outlet 114, and the drain portion 110 is recessed relative to the top surface of the drain plate 100. The water guide portion communicates with the drain portion 110, the water guide portion is recessed relative to the top surface of the drain plate 100, and a fifth included angle θ₁ is formed between the extension direction of the water guide portion and the air outflow direction above the drain plate 100.

When being used, the drain plate 100 is provided below the evaporator 230, and is used to receive the defrosted water generated from the frost at the surface of the evaporator 230 when it encounters heat. A part of the water falls into the water guide portion and is introduced into the drain portion 110 along the extension direction of the water guide portion. A plurality of water guide portions are generally provided, and the water received by each water guide portion is collected in the drain portion 110 and discharged through the outlet 114 of the drain portion 110. Another part of the water directly falls into the drain portion 110 and is discharged through the drain portion 110.

The fifth included angle is different from the fourth included angle in that, in a drain plate provided with both the water guide portion and the drain portion, the included angle formed between the extension direction of the water guide portion and the air outflow direction is the fifth included angle; and in a drain plate provided with only a water guide portion, the included angle formed between the extension direction of the water guide portion and the air outflow direction is the fourth included angle. The angle values of the fifth included angle and the fourth included angle may be selected as required and are not limited here.

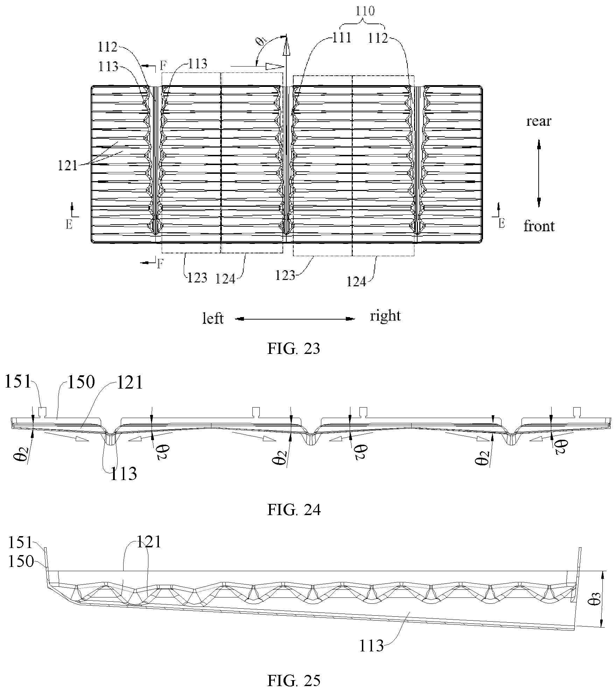

In FIG. 23, the solid arrow above the drain plate 100 indicates the extension direction of the water guide portion, the dotted arrow indicates the air outflow direction, the fifth included angle θ₁ is indicated, and the figure shows the case where the fifth included angle is 90°. In an embodiment, both the water guide portion and the drain portion 110 are recessed based on the top surface of the drain plate 100. The top surface may be a plane or a curved surface. The top surface may be a surface formed by multiple lines, or a surface formed by multiple surfaces. Correspondingly, the bottom of the water guide portion and the bottom of the drain portion 110 form the bottom surface of the drain plate 100. The bottom surface may also be a plane or a curved surface. The bottom surface may be a surface formed by a plurality of lines, or a surface formed by a plurality of surfaces. The upper surface of the drain plate 100 is the entire surface of the drain plate 100 facing upward, and the top surface is a part of the upper surface; and the lower surface of the drain plate 100 is the entire surface of the drain plate 100 facing downward, and the bottom surface is a part of the lower surface.

In the drain plate 100 provided by this embodiment, the water guide portion cooperates with the drain portion 110 to drain the received water, and the drainage problem in the air duct assembly 200 is solved. In addition, the time that the air stays in the air duct assembly 200 may be prolonged by providing the water guide portion to form an included angle between the extension direction and the air outflow direction of the air duct assembly 200, that is, the heat exchange time may be prolonged to improve the heat exchange efficiency and meet the refrigeration requirement of the refrigeration apparatus, and the structure of the drain plate 100 is simple.

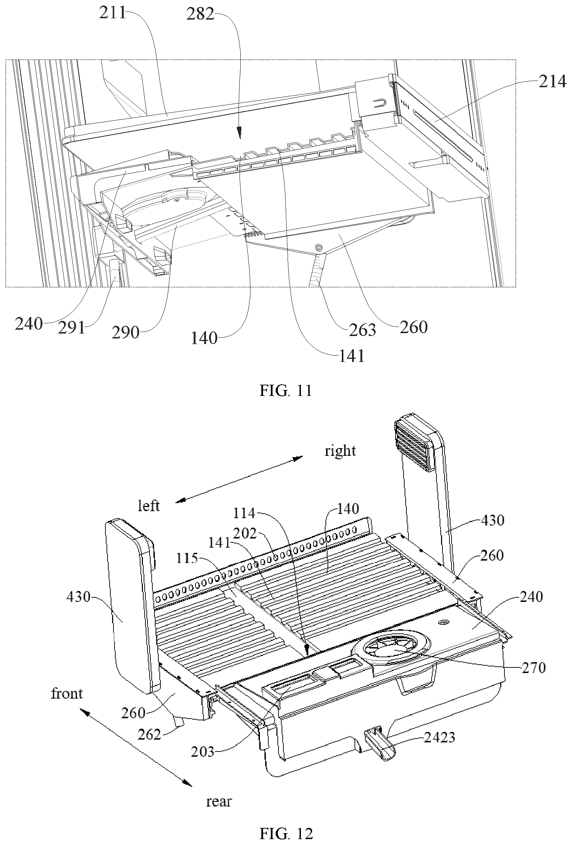

In the structure of the drain plate 100 of the embodiment of the present application, when the depth of the water guide portion recessed downwardly relative to the top surface of the drain plate 100 remains unchanged, and the drain plate 100 is provided with a drain portion 110 that is recessed relative to the top surface of the drain plate 100, the water guide portion may be referred to as a third water guide portion 140. As shown in FIG. 11 to FIG. 13, the drain portion 110 is provided with an outlet 114, and the third water guide portion 140 communicates with the drain portion 110. The defrosted water received by the third water guide portion 140 may be discharged from the openings 170 at an end of the drain plate 100, and may also be discharged from the outlet 114 of the drain portion 110, the water is discharged in a plurality of directions, which has simple structure and good drainage effect.

The evaporator 230 and the drain plate 100 may be provided horizontally, which may discharge the defrosted water and decrease the height of the air duct assembly 200. If the evaporator 230 and the drain plate 100 are both inclined downward for drainage, the downward tilt angle of the evaporator 230 and the drain plate 100 may be reduced (the downward tilt angle of the evaporator 230 and the drain plate 100 may be less than or equal to 7°), the size of the air duct assembly 200 in the height direction is reduced and the internal capacity of the refrigeration apparatus is expanded.

The outlet 114 of the drain portion 110 and the exhaust port are located at the same side of the first cavity body 282, and a drain position and an exhaust position are located at the same side of the first cavity body 282, and the drainage structure and the exhaust structure are conveniently integrated.

When a fan 270 is provided in the air duct assembly 200, the fan 270 and the exhaust port are located at the same side, that is, the outlet 114, the exhaust port and the fan 270 are all located at the same side, and the defrosted water of the fan 270 may be discharged together with the defrosted water of the drain plate 100.

A plurality of third water guide portions 140 are provided in parallel at two sides of the drain portion 110 along the extension direction of the drain portion 110, and the plurality of third water guide portions 140 are distributed below the evaporator 230 to receive the defrosted water at a plurality of positions below the evaporator 230, which is helpful for rapid drainage.

A plurality of drain portions 110 may also be provided, and the plurality of drain portions 110 may be parallel or form an angle. When the area of the drain plate 100 remains unchanged, the more the number of drain portions 110 is, the shorter the length of the third water guide portion 140 is, which helps the water received by the third water guide portion 140 to be collected in the drain portion 110 to shorten the defrosting and drainage time. When multiple drain portions 110 are provided, the third water guide portion 140 near the edge of the drain plate is provided with an opening, and the other third water guide portions 140 communicates with the drain portions 110.

In an embodiment, the recessed depth of the drain portion 110 gradually increases towards the direction of the outlet 114, and the water in the drain portion 110 flows toward the outlet 114 under an action of gravity.

In an embodiment, the bottom of the drain portion 110 is inclined along the second direction, and a seventh included angle θ₃ is formed between the second direction and the top surface of the drain plate 100. That is, the bottom of the drain portion 110 is inclined, the water in the drain portion 110 is collected along the inclined path (that is, along the second direction) to the outlet 114 and discharged, which has a good drainage effect and may avoid the problem of local water accumulation, and the water may flow smoothly.

In an embodiment, when the top surface of the drain plate 100 is horizontally provided, a seventh included angle θ₃ is formed between the second direction and the horizontal plane. The position toward the outlet 114 gradually recess downward to form the drain portion 110 along the top surface of the drain plate 100. The seventh included angle θ₃ is the included angle between the bottom of the drain portion 110 and the horizontal plane, and the second direction is the downwardly inclined direction.

The bottom of the drain portion 110 may be an oblique line or an inclined plane. In some cases, the bottom of the drain portion 110 is an inclined plane, and the inclined plane may be a plane or a curved surface, which may be selected as required.

In some cases, the bottom of the drain portion 110 does not form a continuous oblique line or inclined surface. For example, the bottom of the drain portion 110 may be a step shape, which may still meet the drainage requirement.

In an embodiment, the seventh included angle θ₃ may be less than or equal to 7°. The small seventh included angle θ₃ helps to reduce the distance between the top surface and the bottom surface of the drain plate 100, and the water may be discharged in small angle, the size of the air duct assembly 200 in the height direction is reduced, the space occupied by the air duct assembly 200 is decreased, the storage space of the refrigeration apparatus is increased, and a large-capacity refrigeration apparatus is provided.

In an embodiment, the seventh included angle θ₃ may also be greater than 7°. Since the drain portion 110 occupies a relatively small area of the drain plate 100, the downwardly inclined angle of the drain portion 110 is slightly larger, which has little effect on the overall volume of the drain plate 100. Therefore, the value of the seventh included angle θ₃ is not strictly limited.

In some cases, as shown in FIG. 12, the recessed depth of the drain portion 110 remains unchanged. The drain portion may be referred to as the third drain portion 115, and the drain plate 100 is inclined toward the outlet 114 to facilitate drainage. If the outlet 114 is located at the rear end of the air duct assembly 200, the drain plate 100 is inclined downward from front to rear and the water in the drain portion 110 flows backward and is discharged.

As shown in FIG. 11 and FIG. 12, the third water guide portion 140 comprises a fourth flow guide surface 141 provided along the extension direction of the third water guide portion 140, and the fourth flow guide surface 141 approaches the opposite side thereof from the top surface to the bottom surface of the drain plate 100. The fourth flow guide surface 141 may guide the defrosted water received by the top surface of the drain plate 100 and the fourth flow guide surface 141 to the bottom of the third water guide portion 140 and the water in the third water guide portion 140 is discharged.

The fourth flow guide surface 141 is inclined toward the outlet 114 from the bottom surface to the top surface of the drain plate 100. When the drain plate 100 is inclined toward the outlet 114, the amount of water collected in the third water guide portion 140 is large, and the fourth flow guide surface 141 may guide the water backward to guide part of the water flow to be discharged from the rear.

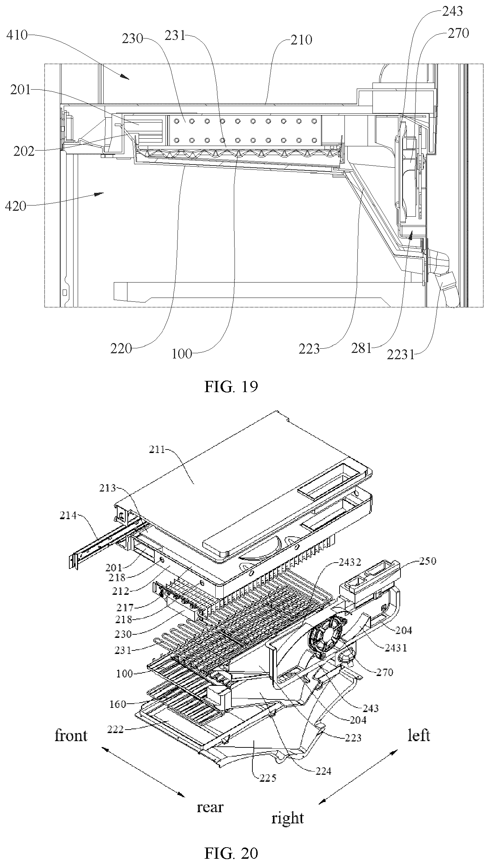

In an embodiment of the present application, as shown in FIG. 20 to FIG. 25, the recessed depth of the water guide portion gradually increases toward the direction of the drain portion 110, and the water guide portion may be referred to as a first water guide portion 120. The depth of the first water guide portion 120 gradually increases toward the direction of the drain portion 110, and the water flows toward the drain portion 110 under the action of gravity and is discharged from the outlet 114 of the drain portion 110.

In an embodiment, the bottom of the first water guide portion 120 is inclined along the first direction toward the direction of the drain portion 110, and a sixth included angle θ₂ is formed between the first direction and the top surface of the drain plate 100. That is, the bottom of the first water guide portion 120 is inclined, the water in the first water guide portion 120 is collected along the inclined path (first direction) to the drain portion 110, which has a good drainage effect, the problem of local water accumulation may be avoided, and the water may flow smoothly.

When the top surface of the drain plate 100 is provided horizontally, in an embodiment, a sixth included angle θ₂ is formed between the first direction and the horizontal plane. The first water guide portion 120 is gradually recessed downwardly from the end away from the drain portion 110 to the position connected to the drain portion 110 along the top surface of the drain plate 100. The sixth included angle θ₂ is the angle between the bottom of the first water guide portion 120 and the horizontal plane, and the first direction is the oblique downward direction.

The bottom of the first water guide portion 120 may be an oblique line or an inclined surface. In some cases, the bottom of the first water guide portion 120 is an inclined surface, and the inclined surface may be a plane or a curved surface, which may be selected as required.

In some cases, the bottom of the first water guide portion 120 does not form a continuous oblique line or inclined surface. For example, the bottom of the first water guide portion 120 may be a step shape, which may still meet the water guide requirement.

In an embodiment, the sixth included angle θ₂ is less than or equal to 7°. The small sixth included angle θ₂ helps to reduce the distance between the top surface and the bottom surface of the drain plate 100, and the water may be discharged in small angle, the size of the air duct assembly 200 in the height direction is reduced, the space occupied by the air duct assembly 200 is decreased, the storage space of the refrigeration apparatus is increased, and a large-capacity refrigeration apparatus is provided.

In some cases, the sixth included angle θ₂ is set to 3°, which may meet the drainage requirements of the drain plate 100 and may also fully reduce the height of the drain plate 100 to discharge water in small angle. The sixth included angle may also be 1°, 2°, 4°, 5° or 6°.

In some cases, the first water guide portion 120 is different from the third water guide portion 140 in that the first water guide portion 120 is inclined toward the drain portion 110 in the drain plate 100, and the third water guide portion 140 is inclined toward the end of the drain plate 100, that is, the inclined directions are different, and other structures and parameters may be set to be the same, for example, the inclination angle may be the same.

In an embodiment, the bottom surfaces of the drain plates 100 corresponding to the plurality of water guide portions provided in parallel at the same side of the drain portion 110 are coplanar, the bottom surface of the drain plate 100 has better flatness, the drain plate 100 has simple appearance, and the drain plate 100 is easy to be positioned and mounted.

The parallel arrangement here means that a plurality of water guide portions are provided in sequence at one side of the extension direction of the drain portion 110. A plurality of water guide portions are generally provided in parallel at two sides of the drain portion 110, that is, the drain portion 110 is provided between two rows of water guide portions. When the drain portion 110 is provided at the end of the drain plate 100, the water guide portion is only provided at one side of the drain portion 110.

In an embodiment, the extension direction of the water guide portion is perpendicular to the air outflow direction, which effectively prolongs the time that the air stays in the first cavity body 282 to fully exchange heat.

In an embodiment, an eighth included angle is formed between the extension direction of the drain portion 110 and the air outflow direction, which minimizes the air discharged along the extension direction of the drain portion 110, and can also prolong the time that the air stays in the first cavity body 282 to ensure the heat exchange effect.

The drain portion 110 may also extend along the air outflow direction, and the water guide portions may be symmetrically provided at two sides of the drain portion 110 to facilitate the water guide portions at two sides of the drain portion 110 to uniformly and stably guide water.

As shown in FIG. 20 and FIG. 25, when the drain portion 110 extends along the air outflow direction, the water guide portion is perpendicular to the air outflow direction, and the air entering the water guide portion is minimized.

In an embodiment, as shown in FIG. 24 and FIG. 25, the recessed depth of the drain portion 110 is greater than or equal to the recessed depth of the water guide portion. That is, a minimum depth of the drain portion 110 needs to be greater than or equal to a maximum depth of the water guide portion, the water in the water guide portion may be collected to the drain portion 110 to avoid water to be accumulated in the water guide portion.

In an embodiment, as shown in FIG. 20, FIG. 21 and FIG. 24, a plurality of water guide portions in parallel are provided at two sides of the drain portion 110, and the plurality of water guide portions guide water from different parts into the drain portion 110. By providing multiple water guide portions, two sides of the drain portion 110 form a wavy structure, which minimizes the area of the top surface of the drain plate 100, reduces the water accumulation at the top surface of the drain plate 100, and allows the water received by the drain plate 100 to be discharged from the outlet 114 along the water guide portion and the drain portion 110 as soon as possible.

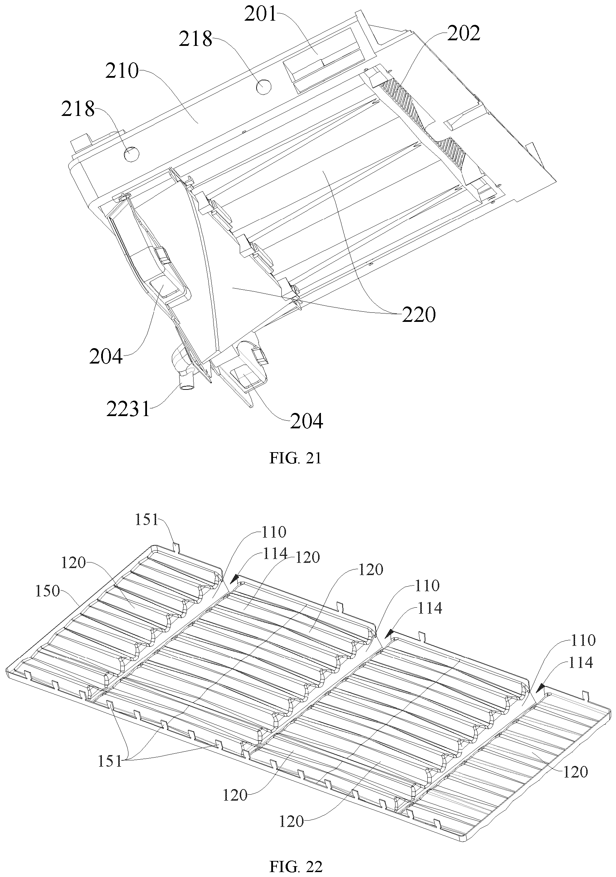

In an embodiment, as shown in FIG. 22 and FIG. 23, at least two drain portions 110 are provided, and the two or more drain portions 110 have two or more outlets 114 to discharge water at a plurality of positions, which is helpful for rapidly draining water at the drain plate 100. When the area of the drain plate 100 remains unchanged, the number of drain portions 110 increases, and the length of the water guide portions may be shortened, and the water enters the drain portion 110 as soon as possible.

The adjacent drain portions 110 are referred to as a first drain portion 111 and a second drain portion 112. A first water guide area 123 at one side of the first drain portion 111 and a second water guide area 124 at one side of the second drain portion 112 are provided between the first drain portion 111 and the second drain portion 112. The recessed depth of the water guide portion of the first water guide area 123 gradually increases toward the direction of the first drain portion 111, and the recessed depth of the water guide portion of the second water guide area 124 gradually increases toward the direction of the second drain portion 112. That is, the recessed depth of the water guide portion is the smallest at a docking position of the first water guide area 123 and the second water guide area 124, which helps the water received by the first water guide area 123 to be guided into the first drain portion 111, helps the water received by the second water guide area 124 to be guided into the second drain portion 112, shortens the length of the water guide, and conveniently collects the water in the drain portion 110.

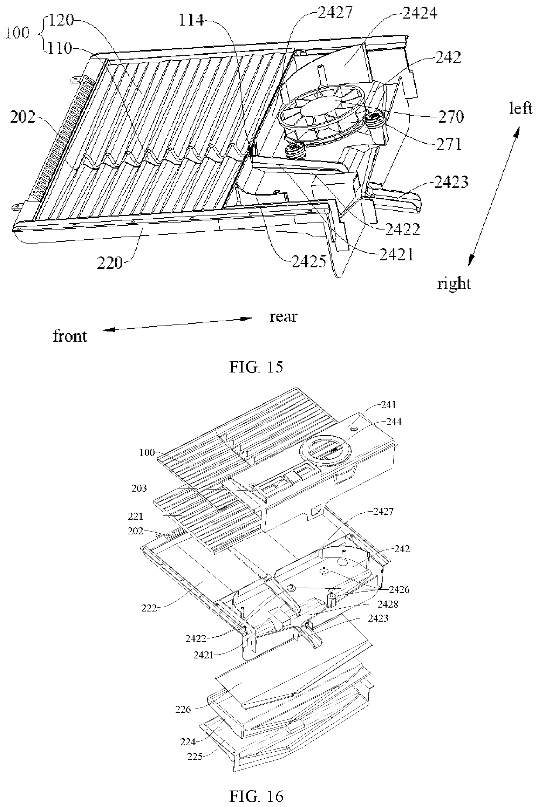

As shown in FIG. 15, one drain portion 110 may also be provided. In this case, the outlet 114 of the drain portion 110 avoids the inlet of the fan 270 as much as possible. A plurality of water guide portions in parallel are provided at two sides of the drain portion 110, which helps to shorten the water guide path of the water guide portion to speed up the water discharge.

As shown in FIG. 12, FIG. 13, FIG. 15, FIG. 16, FIG. 22 and FIG. 23, the drain portion 110 extends from front to rear, the outlet 114 is provided at the rear end of the drain plate 100, the water guide portion extends in the left-right direction, and a corrugated structure is formed at the left and right sides of the drain portion 110. The arrangement of the corrugated plate may facilitate the gathering and discharging of water. The evaporator 230 is not required to be provided inclined downward along the front-rear direction.

The water guide portion and the top surface of the drain plate 100 form an included angle of less than 7°, that is, the drain plate 100 is formed with a water guide portion extending inclined in the left-right direction, and the tilt angle of the water guide portion does not affect the angle of the drain plate 100 in the front-rear direction. The drain portion 110 extends from front to rear, and a seventh included angle θ₃ is formed between the drain portion 110 and the horizontal plane from front to rear. The seventh included angle θ₃ affects the height change of the drain plate 100 in the front-back direction. However, on the whole, the drain portion 110 is provided at a local position of the drain plate 100, the area of the drain plate 100 occupied by the drain portion 110 is small, and the local position of the drain plate 100 has a slightly larger inclination angle, which has little impact on the overall storage space in the compartment and may also optimize the volume in the compartment.

In the above content, the water guide portion may be at least one of the first water guide portion 120 and the third water guide portion 140, that is, the drain plate 100 may be provided with the above-mentioned drain portion 110 and at least one of the first water guide portion 120 and the third water guide portion 140, and the structure of the drain plate 100 is diverse.

In an embodiment, with reference to FIG. 24 and FIG. 25, the first water guide portion 120 comprises a first flow guide surface 121 provided along the extension direction of the first water guide portion 120, and the first flow guide surface 121 approaches the opposite side thereof from the top surface to the bottom surface of the drain plate 100, that is, the longitudinal section of the first water guide portion 120 is contracted from top to bottom. The water falling at the first flow guide surface 121 and the top surface may be collected to the bottom of the first water guide portion 120, and then be collected to the drain portion 110 along the first water guide portion 120.

At least one of the two side surfaces of the first water guide portion 120 along its extension direction is provided as the first flow guide surface 121. The shape of the longitudinal section of the first water guide portion 120 may be an inverted triangle or an inverted trapezoid. Referring to FIG. 24 and FIG. 25, both side surfaces of the first water guide portion 120 in the extension direction are first flow guide surfaces 121, and two sides of the first water guide portion 120 may be used for guidance.

In an embodiment, referring to FIG. 24 and FIG. 25, the drain portion 110 comprises a second flow guide surface 113 provided along the extension direction of the drain portion 110, the second flow guide surface 113 approaches its opposite side surface from the top surface to the bottom surface of the drain plate 100, the longitudinal section of the drain portion 110 is contracted from top to bottom, and the water falling at the second flow guide surface 113 and the top surface may be collected at the bottom of the drain portion 110 and then be discharged from the outlet 114.

At least one of the two side surfaces of the drain portion 110 along its extension direction is provided as the second guide surface 113. The shape of the longitudinal section of the drain portion 110 may be an inverted triangle or an inverted trapezoid. As shown in FIG. 25, both the two side surfaces of the drain portion 110 in the extension direction are the second flow guide surfaces 113, and two sides of the drain portion 110 may be used for guidance.

As shown in FIG. 24 and FIG. 25, the first water guide portion 120 is provided with a first flow guide surface 121 and the drain portion 110 is provided with a second flow guide surface 113 to fully guide the water received by the drain plate 100 to be discharged from the outlet 114 as soon as possible.

In the above embodiment, the first flow guide surface 121 and the second flow guide surface 113 may be a plane or a curved surface, which may be selected as required.

In an embodiment, a first preset cross section in the extension direction of the water guide portion gradually decreases in width in a direction toward the drain portion 110. In an embodiment, the water guide portion is gradually contracted toward the direction of the drain portion 110 to converge the water in the water guide portion, which helps the water in the water guide portion enter the drain portion 110.

In an embodiment, the first preset cross section may be a horizontal cross section of the drain plate 100 in the mounted state parallel to the cross section of top surface of the drain plate 100. The width of the water guide portion is a distance between the two side walls in the extension direction of the water guide portion. Taking the first water guide portion 120 as an example, the width of the first water guide portion 120 is the distance between the two first flow guide surfaces 121. The gradually decrease generally means continuous decrease, but a step decrease is not excluded.

In an embodiment, the width of the second preset cross section in the extension direction of the drain portion 110 increases toward the direction of the outlet 114. The defrosted water received by the plurality of water guide portions converges toward the drain portion 110, and the water volume at the outlet 114 of the drain portion 110 is the largest. The increased width of the drain portion 110 may provide a larger drainage space, which is conducive to stably discharging water.

In an embodiment, the second preset cross section is a horizontal cross section of the drain plate 100 in the mounted state parallel to the cross section of top surface of the drain plate 100. The width of the drain portion 110 is a distance between the two side walls in the extension direction of the drain portion 110, that is, the distance between the two second flow guide surfaces 113. The increase means generally gradual increase, but a step increase is not excluded.

The first preset cross section is parallel to the second preset cross section, and may also be coplanar.

In an embodiment, as shown in FIG. 22, the edge of the drain plate 100 is folded upward to form a turnup 150, and the turnup 15 surrounds the drain plate 100 and is grooved at a position corresponding to the outlet 114. The turnup 150 plays a role in blocking the water at the upper surface of the drain plate 100 from overflowing outward, the water at the upper surface of the drain plate 100 is discharged along the outlet 114, and it is ensured that the water in the air duct assembly 200 is discharged from the drain port.

A local position of the turnup 150 extends upward to form a position portion 151. Two adjacent position portions 151 are used to limit the first heater 231 above the drain plate 100. The fixing mode of the first heater 231 is simple, and the structure of the drain plate 100 is simple.

In an embodiment, when an opening is formed at an end of the water guide portion, no turnup is needed.

In the above embodiment, the contour shape of the drain plate 100 is associated with the shape of the evaporator 230 and the air duct assembly 200, and the shape of the drain plate 100 is not limited. The contour shape of the drain plate 100 may be rectangular, trapezoidal, circular or other shapes. The upper surface and the lower surface of the drain plate 100 have the same shape.

The drain plate 100 in the above embodiment is applied to the air duct assembly 200, that is, the drain plate 100 is provided below the evaporator 230, the evaporator 230 does not need to be inclined downward from the front to the rear direction, which solves the problem that the evaporator 230 has an inclined angle and loses the volume of the compartment. A small-angle defrosting and drainage is achieved in case of ensuring the heat exchange efficiency in the air duct assembly 200, and the drop of the air duct assembly 200 in the height direction is reduced, which helps to maximize the volume of the compartment.

In actual use, the evaporator 230 may also be slightly inclined downward, but even if the evaporator 230 is not inclined downward, the drainage effect will not be affected.

The drain plate 100 is also connected to a vibrator (which is not shown in the figure), and the vibrator provides a vibration force based on the defrosting requirement. The starting and closing of the vibrator are closely associated with the timing of defrosting. The vibrator may be started synchronously with the defrosting, or the vibrator may be delayed appropriately compared to the defrosting.

The vibrator may be any one of an eccentric motor, an ultrasonic vibrator or an electromagnetic vibrator.

Based on the above-mentioned drain plate 100, the drain structure communicating the drain plate 100 and the drain pipe is described below.

As shown in FIG. 2 to FIG. 13, the air duct assembly 200 further comprises a first drain component 260 communicating with the openings 170 of the drain plate 100 in the first cavity body 282. The first drain component 260 and the fan 270 are located at different sides of the drain plate 100 (such as two adjacent sides). The first drain component 260 is a side drain structure.

The first drain component 260 is provided with a first drain port 262. The first drain port 262 communicates with a drain pipeline (the drain pipeline is a first drain pipe 263) to discharge the water received by the drain plate 100.

The first drain component 260 is provided with a drain channel, and the cross-sectional area of the drain channel gradually decreases from top to bottom, which may ensure that the drained water at the position of the opening 170 is fully received, and the drained water may also be collected to the first drain port 262.

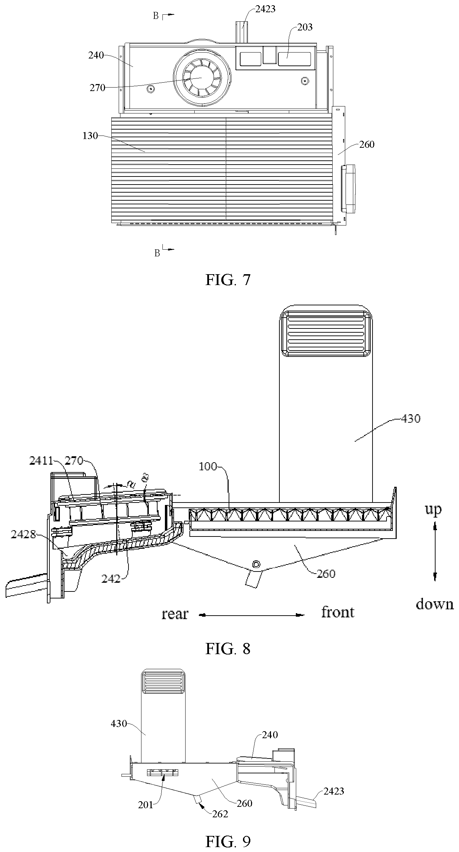

As shown in FIG. 6 and FIG. 7, the first drain component 260 covers all the openings 170 of the drain plate 100 as much as possible to ensure that the connection parts of the first drain component 260, the air duct component 220 and the partition component 210 are hermetic, which avoids air leakage and water leakage. As shown in FIG. 5 and FIG. 7, part of the openings 170 do not correspond to the first drain component 260 to illustrate positions of the openings 170. In actual application, the first drain component 260 covers all the openings 170.

The first drain component 260 is provided with a through hole communicating with the openings 170, and the area of the through hole covers all the openings 170 to ensure the drainage effect and the hermetic effect and avoid water leakage.

In an embodiment, the first drain component 260 is provided with at least one air inlet, that is, the first drain component 260 is provided with at least one of the first air inlet 201 and the second air inlet 202. As shown in FIG. 6 and FIG. 9, the first drain component 260 provided with the first air inlet 201 is taken as an example for explanation. The first air inlet 201 penetrates through the interior of the first drain component 260 and communicates with the first cavity body 282 to return air from the first compartment 410. The first air inlet 201 communicates with the first compartment 410 through the air return component 430 to return air.

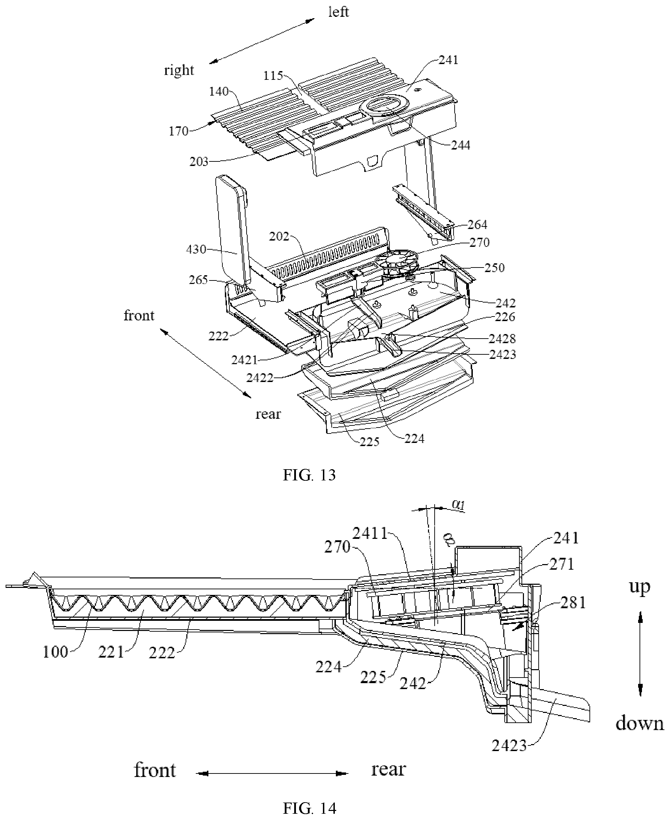

As shown in FIG. 13, the first drain component 260 comprises a first wall plate 264 and a second wall plate 265 provided opposite to each other, the first wall plate 264 is provided with a through hole, and the second wall plate 265 is provided with a first air inlet 201. The first wall plate 264 faces the drain plate 100, and the second wall plate 265 faces the cabinet 400. The first wall plate 264 and the second wall plate 265 may be detachably connected or integrated. In some cases, the first drain component 260 is provided as an integrated structure to avoid leakage at the connection.

In an embodiment, when no first air inlet 201 is provided at the first drain component 260, the partition component 210 is mounted above the air duct component 220, and the partition component 210 is provided with a first air inlet, the air return of the air return component 430 of the first compartment 410 enters the first cavity body 282 through the first air inlet 201.

As shown in FIG. 2 to FIG. 13, the openings 170 of the drain plate 100 faces a first side of the first cavity body 282, the second cavity body 281 is located at a second side of the first cavity body 282, the fan 270 is provided in the second cavity body 281, and the first side of the first cavity body 282 is adjacent to the second side. The first side of the first cavity body 282 may be at least one of the left side and the right side, and the second side of the second cavity body 281 is the rear side. The water outflow direction of the drain plate 100 is different from the air outflow direction of the first cavity body 282, which may reduce the water vapor carried in the air, reduce the influence of drainage on the fan 270, and reduce the amount of frost at the fan 270. The openings 170 of the drain plate 100 face at least one of the left side and the right side.

As shown in FIG. 5 to FIG. 8, the drain plate 100 comprises a second water guide portion 130 recessed relative to the top surface of the drain plate 100, and the extension direction of the second water guide portion 130 forms an angle with the air outflow direction above the drain plate 100. The recessed depth of the second water guide 130 gradually increases along the direction of the preset surface facing the first side of the second cavity body 281, and the second water guide portion 130 is provided with openings 170 at the end facing the first side of the second cavity body 281. The water received by the second water guide portion 130 is discharged from the openings 170 along the extension direction of the water guide portion, the openings 170 communicate with the above-mentioned first drain component 260, and the water is discharged through the first drain port 262. The structure of the drain plate 100 is simple and the drainage effect is good. In addition, the air return of the first compartment 410 enters the first cavity body 282 through the first air inlet 201, and the air enters the first cavity body 282 from the left or right side and may flow along the second water guide portion 130. The air return of the second compartment 420 enters the first cavity body 282 through the second air inlet 202, and the air enters the first cavity body 282 from the front side of the air duct assembly 200. The air return of the first compartment 410 and the air return of the second compartment 420 enter the first cavity body 282 through different paths, the contact between the two paths of air return is reduced, and the amount of frost caused by the contact between the two air return is also reduced.

The air outflow direction above the drain plate 100 is from front to rear, and the extension direction of the second water guide portion 130 is the left and right direction, and the included angle between the extension direction of the second water guide portion 130 and the air outflow direction above the drain plate 100 is 90°. The second water guide portion 130 may play a role in slowing down the flow speed of the air in the first cavity body 282, which may prolong the time that the air stays in the first cavity body 282 and optimize the heat exchange effect.

In an embodiment, the drain plate 100 comprises a second water guide portion 130 extending from a preset position to the left and a second water guide portion 130 extending from a preset position to the right, the drain plate 100 is provided with openings 170 facing the left and right sides, and the first drain components 260 are provided at both the left and right sides of the air duct assembly 200, and the drain plate 100 has the simple structure and the good water guide effect. The preset position may be a symmetrical surface of the drain plate 100, or a longitudinal surface extending along the front-rear direction. The preset surface may be an end surface of the drain portion, and the preset surface of the second water guide portion extending to the left and right sides of the drain plate may be the same longitudinal surface or different longitudinal surfaces.

Different from the above-mentioned embodiment, as shown in FIG. 10 to FIG. 13, the drain plate 100 provided in the air duct assembly 200 is provided with a third water guide portion 140, and the openings 170 of the third water guide portion 140 communicate with the first drain component 260.

When the fan 270 is provided at the rear side of the air duct assembly 200, and the first drain component 260 is at least provided at one of the left and right sides of the air duct assembly 200, the above-mentioned drainage mode may be side drainage. Since the fan 270 is provided at the rear of the air duct assembly 200, the evaporator 230 and the fan 270 drain water independently, and the defrosted water of the evaporator 230 is discharged from the left and right sides through the first drain component 260, and the defrosted water flowing toward the direction of the fan and the water condensed by encountering the fan 270 may be discharged through the structure below the fan 270. The structure below the fan 270 may be the rear drainage structure described below, or other structures that may discharge water in the second cavity body 281.

Different from the drainage mode of the first drain component 260 described above, as shown in FIG. 10 to FIG. 16, the air duct assembly 200 further comprises a fan hood 240, the fan hood 240 limits a second cavity body 281, the fan 270 is provided in the second cavity body 281 of the fan hood 240, the fan hood 240 is provided with a vent opening 244, and the second cavity body 281 communicates with the first cavity body 282 through the vent opening 244.

In some cases, both the fan hood 240 and the fan 270 are provided at the rear side of the air duct assembly 200, and the second drain component 290 located at the side where the fan is located provides a rear drainage mode.

The fan hood 240 is provided with a second drain component 290, and the second drain component 290 is provided in the fan hood 240, or the second drain component 290 is provided below the outside of the fan hood 240.

As shown in FIG. 14 to FIG. 16, when the second drain component 290 is provided in the fan hood 240, the space in the fan hood 240 is fully utilized, the height of the air duct assembly 200 may be shortened, and the capacity of the refrigeration apparatus may be enlarged.

The fan hood 240 is provided at the side where the outlet 114 of the drain plate 100 is located, and one end of the fan hood 240 facing the drain plate 100 communicates with the outlet 114 of the drain plate 100. The fan hood 240 comprises a first hood body 241 and a second hood body 242 located below the first hood body 241, and the fan 270 is provided above the second hood body 242. The second hood body 242 is provided with a third drain port 2423, and the water discharged from the outlet 114 of the drain plate 100 is guided to the third drain port 2423 along the second hood body 242. The second hood body 242 may receive the water guided from the drain plate 100, the water dripping from the first hood body 241, and the water dripping from the fan 270, and discharge the defrosted water from the first cavity body 282, which helps to simplify the structure of the air duct assembly 200. The drain plate 100 may adopt a structure with the drain portion 110, and the details may be referred to the embodiment of the drain plate 100 described above. The outlet 114 of the drain plate 100 faces rearward, the second hood body 242 is located behind the drain plate 100, and the second hood body 242 may be provided as a rear drainage structure.

The second drain component 290 is provided with a first water guide channel 2421 communicating with the outlet 114 of the drain plate 100, the second drain component 290 comprises a partition portion 2422 protruding upward along the surface of the second hood body 242, the partition portion 2422 limits the first water guide channel 2421, and the fan 270 is located at one side of the partition portion 2422. The partition portion 2422 plays a role of separating the first water guide channel 2421 from the fan 270, which prevents water from flowing to the fan 270 and reduces the influence of water on the fan 270.

The first water guide channel 2421 is inclined downward in the direction away from the outlet 114 of the drain plate 100, the water in the first water guide channel 2421 is discharged downward, which has a simple structure and a good drainage effect. A third drain port 2423 is formed at the end of the first water guide channel 2421 and connected to a drain pipe for discharging water into a compressor compartment through the drain pipe.

The partition portion 2422 may be a plate-shaped structure or a block-shaped structure protruding upward from the second hood body 242, which may be selected as required. The partition portion 2422 may also be a part that may be detachably connected to the second hood body 242, such as a plate structure that is plugged or clamped to the second hood body 242. The structure of the partition portion 2422 is not limited to this, and other structures that may achieve the partition function are also acceptable.

In an embodiment, a divider plate 2427 is provided between the drain plate 100 and the second hood body 242, the divider plate 2427 allows the drain plate 100 and the second hood body 242 to communicate only at the outlet 114, and other parts are separated by the divider plate 2427 to ensure that the first cavity body 282 and the second cavity body 281 communicate at the vent opening 244 and the outlet 114, and other parts are divided. The divider plate 2427 may be integrated or detachably connected with the second hood body 242.

The second hood body 242 and the drain plate 100 may be two independent components, or the second hood body 242 and the drain plate 100 may be integrally formed as a whole component.

A first air guide portion 2424 and a second air guide portion 2425 are provided inside the fan hood 240, and the first air guide portion 2424 and the second air guide portion 2425 cooperate with the fan 270 to guide the air to the first exhaust port 203 and the second exhaust port 204 to ensure that the air flows out from the corresponding paths. As shown in FIG. 15, the second hood body 242 is provided with the first air guide portion 2424 and the second air guide portion 2425.

The fan 270 is mounted at the upper surface of the second hood body 242 through a fan mount seat 271, the upper surface of the second hood body 242 is provided with a plurality of second mount columns 2426, the fan mount seat 271 is fixed at the second mount columns 2426, a tilt angle and direction of the fan 270 may be adjusted by adjusting the height of the second mounting posts 2426 at different positions, and the structure is simple.

An upper surface of the second hood body 242 is inclined downwardly in the direction away from the drain plate 100, that is, in the direction toward the third drain port 2423, the defrosted water at the surface of the second hood body 242 may flow toward the third drain port 2423 under the action of gravity.

The second hood body 242 is provided with a water collect portion 2428 located at the side of the second hood body 242 facing the third drain port 2423, the surface area of the water collect portion 2428 in the direction of the third drain port 2423 gradually decreases and communicates with the third drain port 2423, and the water collected by the water collect portion 2428 may be discharged through the third drain port 2423. The surface area of the water collect portion 2428 gradually decreases in the direction of the third drain port 2423, that is, the water collect portion 2428 is contracted in the direction of the third drain port 2423 to facilitate the defrosted water received by the second hood body 242 to be collected and discharged.

Based on the upper surface of the second hood body 242 being inclined downward toward the third drain port 2423, the water collect portion 2428 may also be inclined downward for better drainage effect, but the water collect portion 2428 is not limited to being inclined downward, and the situation where the water collect portion is horizontally provided is not excluded.

The second hood body 242 is provided with a heat component 226, and the heat component 226 heats and defrosts the fan hood 240 and the fan 270 therein and other components by heating the second hood body 242. The heat component 226 may be a heat film formed at the second hood body 242, or the heat component 226 may be a heat plate located below the second hood body 242. The structural form of the heat component 226 is not limited thereto, and other structures capable of heating and defrosting are also applicable.

Different from the above-mentioned second drain component 290, as shown in FIG. 10 and FIG. 11, the second drain component 290 may also be located below the fan hood 240, and the second drain component 290 is hermetic with the outer surface of the fan hood 240 to provide a second water guide channel communicating with the outlet 114 of the drain plate 100. The second water guide channel is spaced from the second cavity body 281, that is, the second water guide channel is spaced from the fan 270 by the fan hood 240, which reduces the influence of water in the second water guide channel on the fan 270 and other components.

The shape of the second drain component 290 may be provided as a U-shaped structure with a turnup, or the second drain component 290 is provided as a structure integrally formed below the second hood body 242. The structure of the second drain component 290 is diverse and may be selected as required. When the drain plate 100 is provided with a plurality of outlets 114, a plurality of second drain components 290 may be provided below the fan hood 240, and the second water guide channel and the fan 270 do not interfere with each other. Below the air duct assembly 200, the local position corresponding to the second drain component 290 protrudes downward, the height of local positions of the air duct assembly 200 is relatively large, which has no effect on the height of other positions and may also play a role in expanding the capacity of the refrigeration apparatus.

, The second water guide channel is inclined downward in the direction away from the outlet 114 of the drain plate 100, the water in the second water guide channel is facilitated to be discharged downward, which has a simple structure and good drainage effect. The second drain component 290 is provided with a second drain port connecting to the second drain pipe 291, and the water is discharged into the compressor compartment through the second drain pipe 291.

The water guide channel (the first water guide channel 2421 or the second water guide channel) may also be provided horizontally, and the size of the air duct assembly 200 in the height direction is not increased due to the water guide channel, which helps to reduce the height of the air duct assembly 200, and the storage space of the refrigeration apparatus is increased.

The fan hood 240 is provided with a wiring hole, the electrical connection components of the air duct assembly 200 may be routed through the wiring hole for electrical connection. The structure is simple and convenient for wiring.

When the mounting mode of the fan 270 is different from the above mode, that is, when no fan hood 240 is provided, the drainage mode is different from that of the above first drain component 260 and the second drain component 290. The air duct component 220 supports the drain plate 100, the drain plate 100 is located below the evaporator 230, a water guide 223 is provided at the side where the outlet 114 of the drain plate 100 is located, a first side of the water guide 223 faces the outlet 114 and communicates with the outlet 114, a second side of the water guide 223 is provided with a drain port, the water guide 223 communicates with the third drain pipe 2231, and the water discharged from the outlet 114 of the drain plate 100 is introduced to the third drain pipe 2231 along the water guide 223. The fan 270 is provided at one side of the evaporator 230, the fan cover plate 243 is located between the fan 270 and the evaporator 230, and an inlet of the fan 270 communicates with the first cavity body 282 through the vent opening 244 of the fan cover plate 243. The fan cover plate 243 is provided outside the water guide 223 and is fixed to the box liner body 300, a cavity for mounting the fan 270 is enclosed between the fan cover plate 243 and the rear wall of the box liner body 300, and the cavity communicates with the first cavity body 282 through the vent opening 244 provided at the fan cover plate 243. In an embodiment, the fan cover plate 243 itself encloses a cavity for mounting the fan 270, the cavity communicates with the first cavity body 282, and the fan cover plate 243 is fixed and mounted at the box liner body 300. A third cavity is provided between the fan cover plate 243 and the water guide 223, and the air in the first cavity body 282 passes through the third cavity and is then discharged by the fan 270.

The water guide 223 may be a part of the air duct component 220, or a part independent of the air duct component 220, which may be selected as required. The fan cover plate 243 is a mounting component of the fan 270, and has a main function similar to the main function of the fan hood 240. A fan cover plate 243 or a fan hood 240 is provided in an air duct assembly 200, the fan cover plate 243 is used in combination with the water guide 223, and the fan hood 240 is used in combination with the second drain component 290. When the air duct assembly 200 comprises the fan hood 240, a vent opening 244 is provided at the fan hood 240, the air in the first cavity body 282 is conveniently discharged by the fan 270 through the vent opening 244.

The fan cover plate 243 is provided with a third air guide portion 2431 and a fourth air guide portion 2432, the fan cover plate 243 is provided with a first exhaust port 203 and a second exhaust port 204, and the fan 270 blows air out of the first exhaust port 203 and the second exhaust port 204.

The fan 270 and the mounting mode of the fan 270 are described as follows.

As shown in FIG. 5 to FIG. 16, the air duct assembly 200 further comprises a fan 270, a first included angle α₁ is formed between a rotation axis of the fan 270 and the vertical direction, the fan hood 240 is provided with a vent opening 244, the inlet of the fan 270 faces the vent opening 244, the second cavity body 281 communicates with the air outflow area of the first cavity body 282 through the vent opening 244, and the second cavity body 281 communicates with the exhaust port of the air duct assembly 200. The air in the first cavity body 282 is sucked into the second cavity body 281 by the fan 270 through the vent opening 244 at the fan hood 240, and the air in the second cavity body 281 passes through the exhaust port into the first compartment 410 or the second compartment 420 under the action of the fan 270. That is, the second cavity body 281 and the above-mentioned first exhaust port 203 and second exhaust port 204 may be adjusted on or off.

The rotation axis of the fan 270 forms a first included angle α₁ with the vertical direction, that is, the front end of the rotation axis of the fan 270 is lower or higher than the rear end. In the case of meeting the ventilation and drainage requirements, the angle of the first included angle α₁ is as small as possible, and the height difference between the front end and the rear end of the rotation axis of the fan 270 is as large as possible, that is, the fan 270 is provided as close to horizontal as possible to reduce the space occupied by the fan 270 in the height direction, and the size of the air duct assembly 200 in the height direction is decreased.

The vent opening 244 and the drain port of the first cavity body 282 are provided staggered, which may minimize the air at the drain port being drawn out by the fan 270, prolong the heat exchange time of the air in the first cavity body 282, and improve the heat exchange efficiency.

The fan hood 240 is fixed at the box liner body 300, and the air in the first cavity body 282 passes through the second cavity body 281 and then is discharged by the fan 270.

In an embodiment, the air duct assembly 200 further comprises a fan hood 240, the fan hood 240 comprises a first hood body 241 and a second hood body 242, the first hood body 241 is provided with a flow guide surface 2411 facing the fan 270, a first side of the flow guide surface 2411 is higher than a second side of the flow guide surface 2411, and the first side of the flow guide surface 2411 and the second side of the flow guide surface 2411 are opposite sides; the fan hood 240 limits a second cavity body 281, and the fan 270 is provided in the second cavity body 281. The first hood body 241 may play a role in collecting the water vapor above the fan 270, and guides the collected water droplets from the first side of the flow guide surface 2411 to the second side of the flow guide surface 2411. The collection and discharge of water vapor in the second cavity body 281 may be promoted by providing the first hood body 241, which reduces the corrosion of water vapor to the fan 270, and prolongs the life span of the fan 270.

The first included angle α₁ is greater than or equal to 7°, the water collected at the first side of the flow guide surface 2411 may flow to the second side along a slope of its own surface, and the water is guided to the third drain port 2423 along the air duct component 220 below the fan 270, which prevents the water collected at the surface of the first hood body 241 from dripping into the fan 270, and prevents the water from falling into the fan 270 as much as possible. The first side of the flow guide surface 2411 is higher than the second side of the flow guide surface 2411, and the surface of the first hood body 241 facing the fan 270 may be an inclined plane or a curved surface. When the flow guide surface 2411 is a plane, it helps to simplify the structure of the first hood body 241 and facilitate processing. In addition, the water accumulated at the surface of the fan 270 falls and is discharged under the action of gravity.

The first included angle α₁ needs to be less than 70° to reduce the height. The first included angle α₁ may be less than 60°, 50°, 45°, 30°, 20° or 10°. The smaller the first included angle α₁ is, the smaller the size of the air duct assembly 200 in the height direction is.

In an embodiment, when the first included angle α₁ is less than 7°, the exhaust demand may be met, and the size of the air duct assembly 200 in the height direction is smaller, but the surface water guiding effect of the first hood body 241 facing the fan 270 is not good, and it is difficult to meet the demand for the drainage effect. If the first included angle α₁ is less than 7°, the drainage problem of the fan hood 240 needs to be solved.

In some cases, the first cavity body 282 and the second cavity body 281 are two cavities provided in parallel from front to rear; or the second cavity body 281 is surrounded by the first cavity body 282; and the positional relationship between the first cavity body 282 and the second cavity body 281 is not limited to this, as long as the two cavities communicate. Taking the second cavity body 281 being located behind the first cavity as an example, the fan 270 may be inclined forward at the first included angle α₁ or inclined backward at the first included angle α₁. As shown in FIG. 14, the fan 270 is inclined forward at the first included angle α₁, and as shown in FIG. 8, the fan 270 is inclined backward at the first included angle α₁. That is, an upper end of the rotation axis of the fan 270 is inclined forward relative to the vertical direction to form the first included angle α₁, or inclined backward to form the first included angle α₁.

The fan 270 is gradually inclined upward from front to rear, that is, the inlet of the fan 270 faces the air outflow direction of the first cavity body 282, which helps the air in the first cavity body 282 to enter the inlet of the fan 270 and may improve the ventilation effect. The fan 270 is gradually inclined downward from front to rear, which may improve the space utilization rate. In the above structures, the evaporator 230 and the fan 270 may share a drainage structure to simplify the structure; or, the evaporator 230 and the fan 270 may use independent drainage structures to drain water, which may reduce the impact of drainage on the fan 270. As shown in FIG. 5, FIG. 6, FIG. 12 and FIG. 13, the drainage of the evaporator 230 is guided out from the first drain components 260 at the left and right sides, and the drainage of the fan 270 is discharged from the rear end.

In an embodiment, the rotation axis of the fan 270 is collinear with a central axis of the vent opening 244. The fan 270 has a good suction effect during the process of sucking the air in the first cavity body 282 into the second cavity body 281 through the vent opening 244, which is conducive to the effect of air circulation flowing in the air duct assembly 200. In some cases, the shape of the vent opening 244 is adapted to the shape of the inlet of the fan 270, the air in the first cavity body 282 is conveniently sucked into the second cavity body 281 by the fan 270 through the vent opening 244.

The rotation axis of the fan 270 is collinear with the central axis of the vent 244, the flow guide surface 2411 of the first hood body 241 is generally provided to be parallel to the fan 270, or the area of the first hood body 241 corresponding to the fan 270 is provided to be parallel to the fan 270. The fan 270 generally uses a centrifugal fan, which may change the flow direction of the air and conveniently send the air to the first compartment 410 or the second compartment 420. Other fans 270 that have the circulating air supply effect are also applicable.

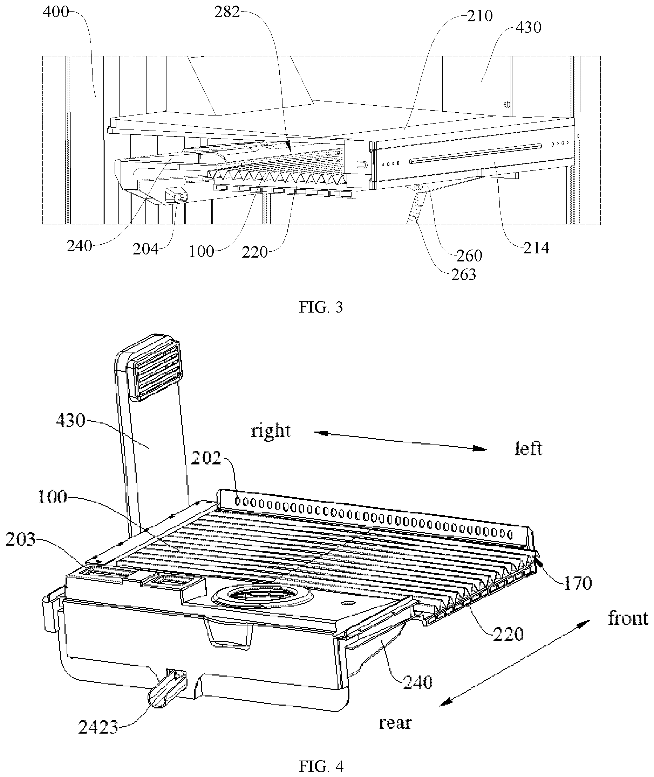

In an embodiment, as shown in FIG. 4 to FIG. 6, the first hood body 241 is located above the fan 270, the first side of the flow guide surface 2411 is away from the drain plate 100, the second side of the flow guide surface 2411 faces the drain plate 100, and the first side of the flow guide surface 2411 is inclined upward at a second included angle α₂ relative to the second side of the flow guide surface 2411. That is, the flow guide surface 2411 of the first hood body 241 is inclined upward at a second included angle α₂ in a direction away from the drain plate 100, and the vent opening 244 faces an air outflow direction of the first cavity body 282, which helps the air in the first cavity body 282 to enter the second cavity body 281 and improves the ventilation effect, and the evaporator 230 and the fan 270 may share the drainage structure to simplify the structure. As shown in FIG. 14 to 16 and FIG. 21, the air duct assembly 200 discharges water from the second drain port or the third drain port 2423 at the rear end.

As shown in FIG. 12 to FIG. 25, when the drain plate 100 comprises a water guide portion and a drain portion 110, the drain portion 110 is provided with an outlet 114, and the water received by the drain plate 100 flows along the water guide portion toward the drain portion 110 and is discharged from the outlet 114, affected by this structure, a part of the air also flows along the water guide portion and the drain portion 110 toward the outlet 114. The air flowing in the direction of the outlet 114 may be prevented from directly discharging from the vent opening 244 by misaligning the outlet 114 with the vent opening, and the time for the air to exchange heat in the first cavity body 282 is prolonged as much as possible, and the heat exchange efficiency is improved. When the second cavity body 281 is located behind the first cavity body 282, the direction away from the drain plate 100 is the direction from front to rear. The first cavity body 282 and the second cavity body 281 may also be provided in left and right direction, and the direction away from the drain plate 100 is the left and right direction. The working principle is consistent with the front and back direction, and it is not repeated here. In combination with FIG. 1 to FIG. 3, FIG. 10, FIG. 11 and FIG. 17 to FIG. 19, the second cavity body 281 being located behind the first cavity body 282 is taken as an example for description.

Referring to FIG. 1 to FIG. 3, FIG. 10, FIG. 11 and FIG. 17 to FIG. 19, the first hood body 241 is located above the fan 270, the first side of the flow guide surface 2411 faces the drain plate 100, the second side of the flow guide surface 2411 faces away from the drain plate 100, the second side of the flow guide surface 2411 is inclined downward at a third included angle α₃ relative to the first side of the flow guide surface 2411, that is, the flow guide surface 2411 of the first hood body 241 is inclined downward at a third included angle α₃ in a direction away from the drain plate 100, and the first hood body 241 guides the water flow to the rear of the fan 270, which helps to quickly discharge the collected water.

In some cases, the second included angle α₃ and the third included angle α₃ are provided to be the same as the first included angle α₁, the rotation axis of the fan 270 is collinear with the central axis of the vent opening 244, and the air flow effect in the duct assembly 200 and the air circulation effect in the refrigeration apparatus is ensured.

The drain plate 100, the fan hood 240, the water guide portion 223 and other components in the above embodiment need to be supported and insulated by the air duct component 220. The structure of the duct component 200 is described below.

The air duct component 220 may be fixed to the box liner body 300 by being fixedly connected to the partition component 210, or the air duct component 220 may be directly fixedly connected to the box liner body 300.

The air duct component 220 comprises a support plate and a second thermal insulation layer 221 provided below the drain plate 100. The support plate is supported below the second thermal insulation layer 221. The shape of the upper surface of the second thermal insulation layer 221 matches the shape of the lower surface of the drain plate 100. The second thermal insulation layer 221 fully insulates the drain plate 100, reduces the diffusion of cold outward, and ensures heat exchange efficiency.

When the lower surface of the drain plate 100 is a curved surface, such as a corrugated shape, the upper surface of the second thermal insulation layer 221 is a corresponding curved surface. When the lower surface of the drain plate 100 is a plane, the upper surface of the second thermal insulation layer 221 is a plane, which may be arranged as required.

The support plate comprises a first support portion 222 and a second support portion 225 inclined downward along the first support portion 222, the second support portion 225 and the outlet 114 of the drain plate 100 are located at the same side of the air duct assembly 200, the first support portion 222 supports the second thermal insulation layer 221, a third thermal insulation layer 224 is provided above the second support portion 225, a water guide 223 or a fan hood 240 is provided above the third thermal insulation layer 224, and the second support portion 225 plays a role in supporting the third thermal insulation layer 224 and the components above the third thermal insulation layer 224 (such as the water guide 223 or the fan hood 240).

The first support portion 222 and the second support portion 225 are independent parts, such as plate parts, and are mounted by a detachable connection mode, such as plug-in, clamping, fasteners and the like; or, the first support portion 222 and the second support portion 225 are an integrated structure, which may reduce the number of parts and simplify assembly. In some cases, the water guide 223 and the drain plate 100 are two independent parts. The water guide 223 and the drain plate 100 may also be formed into an integrated structure.

The air duct component 220 may be provided with an air inlet and the air return of at least one of the first compartment 410 and the second compartment 420 conveniently enters the first cavity body 282 through the air inlet provided in the air duct component 220. For example, an air inlet is provided at the support plate. As shown in FIG. 13, a second air inlet 202 communicating with the second compartment 420 is provided at the front end of the first support portion 222, and the second compartment 420 returns air to the first cavity body 282 through the second air inlet 202 at the front end of the air duct assembly 200.

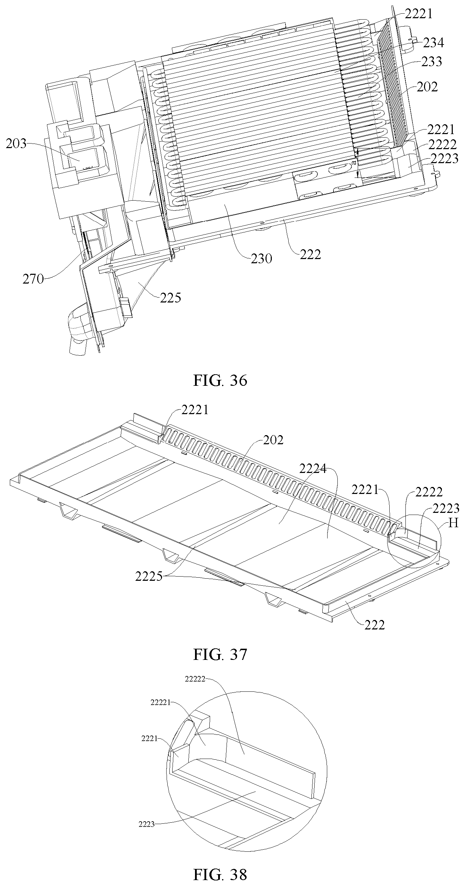

Referring to FIG. 36 to FIG. 38, a first air inlet 201 is provided at the first side of the first cavity body 282, and a second air inlet 202 is provided at the second side of the first cavity body 282. In an embodiment, the cross section of the first air inlet 201 and the cross section of the second air inlet 202 form an included angle perpendicular to their respective air inflow directions. Inflow air of the first air inlet 201 and inflow air of the second air inlet 202 have different temperatures.

The air duct component 220 is provided with a partition portion 2221, and an orthographic projection of the partition portion 2221 at the first air inlet 201 covers a local area of the first air inlet 201, the orthographic projection of the partition portion 2221 at the first air inlet 201 is located at one end of the first air inlet 201 close to the second side, the partition portion 2221 and the first air inlet 201 are spaced apart by a preset spacing a, and the inflow air of the first air inlet 201 flows in the direction of the partition portion 2221. During the flow of the air, a part of the air is branched along the extension direction of the partition portion 2221, and a part of the air continues to flow along the inflow air direction. When air flows in through the first air inlet 201 and the second air inlet 202 simultaneously, the cross-contact amount of the inflow air of the first air inlet 201 and the inflow air of the second air inlet 202 may be reduced.

In the first cavity body 282, spacing is left between an end of the evaporator 230 facing the second side of the first cavity body 282 and the second air inlet 202. Most of the inflow air from the first air inlet 201 and the second air inlet 202 meet at this spacing, contact for heat exchange and flows along the evaporator 230 to the exhaust port. At this spacing, the partition portion 2221 plays a role in guiding part of the inflow air from the first air inlet 201 toward the extension direction of the partition portion 2221, which reduces the amount of inflow air from the first air inlet 201 and the second air inlet 202 that contact for heat exchange, the frosted amount at the end of the evaporator 230 close to the second side of the first cavity body 282 due to different inflow air temperatures is decreased, the amount of inflow air of the first cavity body 282 due to the large frosted amount at the second side is avoided to be affected, the problem of short defrosting cycle due to large amount of frost at the second side is solved, the defrosting period is appropriately prolonged, and electricity is saved. By providing the partition portion 2221, the inflow air of the first air inlet 201 and the inflow air of the second air inlet 202 are kept at two sides of the partition portion 2221 as much as possible.

Referring to FIG. 36, the first air inlet 201 being aligned with the edge of the air duct component 220 is taken as an example, a preset spacing *a* is a distance from the first side edge of the air duct component 220 to the partition portion 2221. In an embodiment, the preset spacing *a* is provided to ensure that appropriate flow space is provided between the first air inlet 201 and the partition portion 2221, the air flows into the first cavity body 282, which avoids the partition portion 2221 blocking the corresponding part of the first air inlet 201. Therefore, the value of the preset spacing *a* is not limited and may be selected as required. The orthographic projection is the projection at the first air inlet 201 along the inflow air direction of the first air inlet 201.

In an embodiment, the air duct component 220 may be formed with a first air inlet 201 (not shown in the figure).

The evaporator 230 is provided inside the first cavity body 282, a heat dissipation fin 234 of the evaporator 230 extends from the second air inlet 202 to the direction of the exhaust port (from the front to the rear in the figure), and the air at the spacing between the evaporator 230 and the second air inlet 202 may flow toward the exhaust port along the guide direction of the heat dissipation fin 234.

The partition portion 2221 extends from the second air inlet 202 to the direction of the exhaust port, and part of the inflow air of the first air inlet 201 flows into the evaporator 230 along the partition portion 2221. The partition portion 2221 and the heat dissipation fin 234 extend in the same direction, and the partition portion 2221 and the heat dissipation fin 234 cooperate to guide the air toward the exhaust port.

The air duct component 220 is provided with a guide surface 2222 in the direction from the first air inlet 201 to the partition portion 2221, the guide surface 2222 is a curved surface, the partition portion 2221 is located at a first end of the guide surface 2222 and is tangent to the first end, and the second end of the guide surface 2222 extends toward the first wall surface that limits the first air inlet 201. A part of the air entering the first cavity body 282 from the first air inlet 201 may flow along the guide path of the guide surface 2222, that is, the part of the air flows along the curved surface of the guide surface 2222, the flow direction of the part of the air is changed by the guide surface 2222, and the part of the air flows along the extension direction of the partition portion 2221. The air flowing along the inflow air direction of the first air inlet 201 is decreased, and the air amount in the two portions of inflow air in the first air inlet 201 and the second air inlet 202 for contact heat exchange is reduced.

In some cases, the second end of the guide surface 2222 is perpendicular to the first wall surface that limits the first air inlet 201, the inflow air of the first air inlet 201 flows along the guide surface 2222 toward the partition portion 2221. An obtuse angle or an acute angle may be formed between the second end of the guide surface 2222 and the first wall surface, and the inflow air flows along the guide surface 2222. The specific structure of the guide surface 2222 may be selected as required.

Referring to FIG. 37 and FIG. 38, the guide surface 2222 comprises a plane portion 22222 and a curved surface portion 22221, a first end of the curved surface portion 22221 is connected to the partition portion 2221, a second end of the curved surface portion 22221 is connected to the plane portion 22222 and is tangent to the plane portion 22222, and the plane portion 22222 extends toward the direction of the first wall surface. The curved surface portion 22221 plays a role in changing the flow direction of the air. The plane portion 22222 may guide the air toward the curved surface portion 22221. The plane portion 22222 cooperates with the curved surface portion 22221, and the inflow air of the first air inlet 201 is smoother.

In some cases, the plane portion 22222 extends to be connected with the first wall surface. However, spacing may be provided between the plane portion 22222 and the first wall surface, and the specific positional relationship between the plane portion 22222 and the first wall surface is not limited.

The air duct component 220 is provided with a second air inlet portion, and the second air inlet portion is provided with a second air inlet 202, the partition portions 2221 are provided at both ends of the second air inlet portion, the first side comprises two side surfaces adjacent to the second side, that is, the first air inlet 201 is provided at two sides adjacent to the second air inlet 202. The part of the inflow air of the corresponding first air inlet 201 may be separated respectively through the partition portions 2221 at both ends of the second air inlet portion, which has a simple structure and good symmetry.

The air duct component 220 is provided with a guide plate 2223, which connects the edge of the air duct component 220 and the partition portion 2221. The guide plate 2223 is located below the partition portion 2221 and the guide surface 2222. The guide plate 2223 may play a role in supporting the partition portion 2221, the partition portion 2221 is kept at a preset height position, and the corresponding relationship between the inflow air of the first air inlet 201 and the partition portion 2221 is ensured. The inflow air of the first air inlet 201 may also flow along the guide plate 2223 toward the exhaust port.

The height of the partition portion 2221 is less than or equal to 1/3 of the height of the first air inlet 201, and the partition portion 2221 separates part of the inflow air in the height direction, which has little effect on the air inlet effect of the first air inlet 201, and may ensure the air inlet efficiency of the first air inlet 201.

The length of the partition portion 2221 is less than or equal to 1/3 of the length of the first air inlet 201, and the partition portion 2221 separates part of the inflow air in the length direction, which has little effect on the air inlet effect of the first air inlet 201, and may ensure the air inlet efficiency of the first air inlet 201. In an embodiment, the length of the partition portion 2221 is the length extending from the air duct component 220 to the evaporator 230.

The air duct component 220 is integrally formed with the partition portion 2221, and the partition portion 2221 does not need to be independently processed and mounted, which may simplify the assembly process of the air duct assembly 200 and save assembly time. Alternatively, the air duct component 220 may be detachably connected to the partition portion 2221, and the structure and shape of the partition portion 2221 may be selected or replaced based on actual needs, the structure of the air duct assembly 200 is more flexible and diverse.

The air duct component 220 comprises a support and a thermal insulation layer, the support plays a role in supporting the thermal insulation layer and the components thereon, and the support is provided with a second air inlet 202. In some cases, the partition portion 2221 is integrated with or detachably connected to the support. In this case, the above-mentioned guide surface 2222 is also a partial surface of the support, and the case where the partition portion 2221 is integrated with or detachably connected to the thermal insulation layer is not excluded.

The above-mentioned embodiments of the partition portion 2221, the embodiments of the guide surface 2222 related to the partition portion 2221, and the embodiments of the guide plate 2223 may also be applied at the partition component 210, and at least one of the partition component 210 and the air duct component 220 has the above-mentioned function.

Based on the above description of the drain plate 100, the air duct component 220 may support the drain plate 100 of one of the above-mentioned embodiments. The air duct component 220 comprises a support plate and a thermal insulation layer located above the support plate, the support plate comprises the above-mentioned first support portion 222 and the second support portion 225, the thermal insulation layer comprises the above-mentioned second thermal insulation layer 221 and the third thermal insulation layer 224, the second thermal insulation layer 221 is provided above the first support portion 222, and the drain plate 100 is provided above the second thermal insulation layer 221.

Referring to FIG. 20 to FIG. 25, the structure of the drain plate 100 comprises a drain portion 110 and a water guide portion. The drain portion 110 is provided with an outlet 114, the drain portion 110 is recessed relative to the top surface of the drain plate 100, the water guide portion communicates with the drain portion 110. The water guide portion is recessed relative to the top surface of the drain plate 100, the extension direction of the water guide portion forms a fifth included angle with the air outflow direction above the drain plate 100, the bottom of the water guide portion is inclined along the first direction toward the drain portion 110, and a sixth included angle θ₂ is formed between the first direction and the top surface of the drain plate 100. The water guide portion here is the first water guide portion 120 in the above embodiment.

An upper surface of the second thermal insulation layer 221 is matched with a lower surface of the drain plate 100. When the drain plate 100 is a corrugated plate, the upper surface of the second thermal insulation layer 221 is a matched corrugated surface. The shape of the lower surface of the second thermal insulation layer 221 may be set as required. For example, the lower surface is a plane extending in the horizontal direction, the lower surface of the air duct component 220 may also be provided as a plane extending in the horizontal direction. The lower surface shape of the air duct assembly 200 is regular and the appearance structure is simple.

Referring to FIG. 37, a lower surface of the second thermal insulation layer 221 is provided with a first support slope inclined along the first direction, and the first support portion 222 is provided with a second support slope 2224 matched with the first support slope. The first support slope and the second support slope 2224 are easy to process and may play a role in reducing the thickness of the air duct assembly 200.

The second insulation layer 221 is further provided with a first support groove adapted to the drain portion 110, the first support portion 222 is provided with a second support groove 2225 matched with the first support groove, and a rear end opening 170 of the second support groove 2225 communicates with the drainage structure to conveniently discharge the defrosted water received by the drain plate 100.

The evaporator 230 above the drain plate 100 is described below.

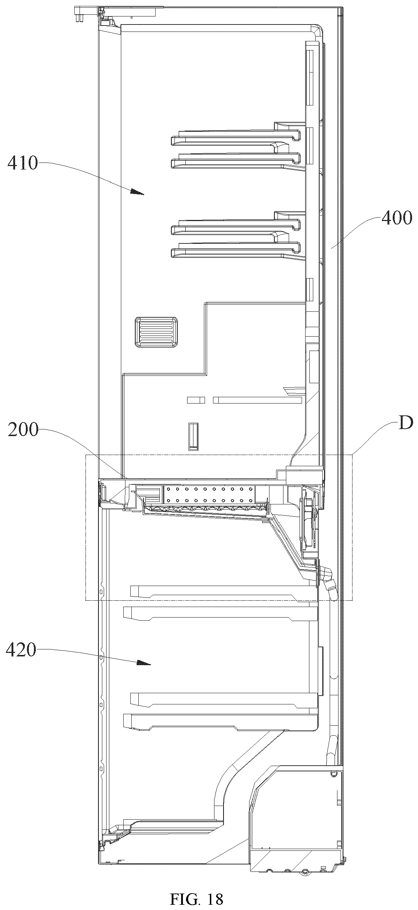

Referring to FIG. 18 to FIG. 20, the evaporator 230 is horizontally provided in the first cavity body 282 of the air duct assembly 200, and the drain plate 100 plays a role in receiving defrosted water below the evaporator 230. The top surface of the drain plate 100 is parallel to the bottom surface of the evaporator 230. The evaporator 230 is provided above the drain plate 100 in FIG. 1, FIG. 2, FIG. 10 and FIG. 11, and the structure of the evaporator 230 is not shown in the figures.

Providing the evaporator 230 horizontally means the height of the evaporator 230 is less than the length and width thereof.

The drain plate 100 is located below the evaporator 230, the drain plate 100 is provided with a water guide portion that is recessed relative to the top surface, and the angle between the evaporator 230 and the horizontal plane is less than or equal to a preset angle.

The included angle between the evaporator 230 and the horizontal plane is less than or equal to the preset angle, that is, the end of the evaporator 230 facing the exhaust port is lower than the end of the evaporator 230 facing the air inlet, the preset angle is formed between a line connecting the end of the evaporator 230 facing the outlet and the end of the evaporator 230 facing the air inlet and the horizontal plane, and the line here may be located at the bottom surface or the symmetric plane in the height direction of the evaporator 230. When the evaporator 230 is in the shape of a cuboid, both the bottom surface and the symmetric plane of the evaporator 230 form the preset angle with the horizontal direction.

In some cases, the preset angle may be less than or equal to 7°, and the preset angle may be at least one of 1°, 2°, 3°, 4°, 5°, 6° and 7°. In an embodiment, the preset angle is limited to less than or equal to 7°to reduce the height of the air duct assembly 200. When the height of the air duct assembly 200 is not strictly limited, the preset angle may be appropriately increased.

In an embodiment, the drain plate 100 is provided with a water guide portion that is recessed relative to the top surface, and the evaporator 230 may be horizontally provided in the first cavity body 282. In this case, the height of the air duct assembly 200 may be fully reduced.

The included angle formed between the evaporator 230 and the horizontal plane is less than or equal to the preset angle to reduce the space occupied by the evaporator 230 in the height direction, and reduce the overall height of the air duct assembly 200, and the capacity of the refrigeration apparatus is enlarged.

Combined with the drain plate 100 structure shown in FIG. 3 to FIG. 14, the preset angle may be 7°, which may meet the defrosting and drainage requirements of the evaporator 230 while reducing the overall height of the air duct assembly 200.

In an embodiment, the evaporator 230 may be mounted horizontally above the drain plate 100, that is, the bottom surface of the evaporator 230 is parallel to the horizontal plane. Compared with the case where the evaporator 230 is inclined, the height of the mounting space required for the horizontally provided evaporator 230 becomes smaller, and the size of the air duct assembly 200 in the height direction may be reduced accordingly, and the space in the box liner body 300 occupied by the air duct assembly 200 becomes smaller. The capacity of the box liner body 300 may be effectively increased in case that the appearance dimension of the box liner body 300 remains unchanged, and a large-capacity refrigeration apparatus is provided.

The mounting state of the drain plate 100 is not limited. The top surface of the drain plate 100 is parallel to the bottom surface of the evaporator 230, or the top surface of the drain plate 100 is inclined downward from front to rear relative to the bottom surface of the evaporator 230.

In an embodiment, the top surface of the drain plate 100 is a plane and is also parallel to the horizontal plane, that is, both the bottom surface of the evaporator 230 and the top surface of the drain plate 100 are provided horizontally, and the top surface of the drain plate 100 is located below the evaporator 230. The bottom surface of the evaporator 230 is parallel to or in contact with the top surface of the drain plate 100, and the spacing between the evaporator 230 and the drain plate 100 becomes smaller, which may prevent the air in the first cavity body 282 from flowing directly from the spacing between the evaporator 230 and the drain plate 100 to the vent opening 244, and helps the air to fully exchange heat in the first cavity body 282.

In an embodiment, the spacing between the evaporator 230 and the drain plate 100 should be minimized as much as possible to slow the speed of the air flowing from the spacing between the evaporator 230 and the drain plate 100 to the vent opening 244 and prolong the time the air stays in the first cavity body 282, the air may fully exchange heat with the evaporator 230 in the first cavity body 282 and then flow out, and the heat exchange efficiency is ensured.

In the above embodiments, the evaporator 230 is a part of a refrigeration system in the refrigeration apparatus. The refrigeration system comprises a compressor, a condenser, a throttling element and the evaporator 230. A refrigerant in the refrigeration system evaporates and absorbs heat in the evaporator 230, providing a refrigeration environment for the air in the first cavity body 282.

The structure of the evaporator 230 is described below by taking the evaporator 230 being mounted in the air duct assembly as an example. The evaporator 230 is not limited to being applied in the air duct assembly 200, and may also be mounted in other applicable environments.

The evaporator 230 comprises a heat exchange tube 233 and a heat dissipation fin 234 connected to the heat exchange tube 233, the heat dissipation fin 234 is provided with a ventilation portion 23421 through which the inflow air from the first air inlet 201 passes, the inflow air from the first air inlet 201 passes through the ventilation portion 23421 and flows into the interior of the evaporator 230 and the inflow air from the first air inlet 201 may fully exchange heat.

In an embodiment, some of the heat dissipation fins 234 are provided with the ventilation portions 23421, or all of the heat dissipation fins 234 are provided with the ventilation portions 23421, which may be selected as required.

The evaporator 230 is described below by taking some of the heat dissipation fins 234 being provided with the ventilation portion 23421 as an example.

The evaporator 230 comprises a heat exchange tube 233, a first heat dissipation fin 2341 and a second heat dissipation fin 2342. Both the first heat dissipation fin 2341 and the second heat dissipation fin 2342 are connected to the heat exchange tube 233, a plurality of first heat dissipation fins 2341 are provided in parallel to form a first heat dissipation portion, the second heat dissipation fin 2342 is at least provided at one side of the first heat dissipation portion (when the evaporator is mounted in the air duct assembly, the second heat dissipation fin 2342 is provided between the first heat dissipation fin 2341 and the first air inlet 201). The second heat dissipation fin 2342 is provided with a ventilation portion 23421 through which the inflow air of the first air inlet 201 passes, part of the inflow air of the first air inlet 201 is branched to the inside of the evaporator 230 through the ventilation portion 23421, the amount of air exchanged by cross contact between the inflow air of the first air inlet 201 and the inflow air of the second air inlet 202 is reduced, and frost condensed due to the heat exchange contact between the inflow air of the first air inlet 201 and the inflow air of the second air inlet 202 is reduced.

The inflow air of the first air inlet 201 is branched through the second heat dissipation fin 2342 of the evaporator 230, which has little impact on the overall structure of the air duct assembly 200. Only part of the heat dissipation fins 234 are required to be replaced with the second heat dissipation fin 2342 having the ventilation portion 23421. The structure is simple and the branching effect at the inflow air is good.

The second heat dissipation fin 2342 is at least located at one side of the first heat dissipation fin 2341, that is, if the first air inlet 201 is provided at one side of the air duct assembly 200, the second heat dissipation fin 2342 is provided at the corresponding side. If the first air inlets 201 are provided at both opposite sides of the air duct assembly 200, the second heat dissipation fins 2342 are provided at two sides of the first heat dissipation fin 2341. The surface of the second heat dissipation fin 2342 faces the first air inlet 201, the second air inlet 202 is located at a first end of the second heat dissipation fin 2342, and the exhaust port is located at a second end of the second heat dissipation fin 2342.

The number of the second heat dissipation fins 2342 may be provided as required, and one or more second heat dissipation fins 2342 are provided. When one second heat dissipation fin 2342 is provided, part of the inflow air of the first air inlet 201 flows between the second heat dissipation fin 2342 and the first heat dissipation fin 2341 through the ventilation portion 23421, and flows toward the exhaust port along the space between the second heat dissipation fin 2342 and the first heat dissipation fin 2341. When more second heat dissipation fins 2342 are provided, the air passes through the ventilation portion 23421 of the second heat dissipation fin 2342 and flows along the space between adjacent second heat dissipation fins 2342 and the space between the second heat dissipation fins 2342 and the first heat dissipation fin 2341 to flow toward the exhaust port, and the air has a larger flow space and better fluidity.

The ventilation portions 23421 of adjacent second heat dissipation fins 2342 communicate in a straight line, that is, among two adjacent second heat dissipation fins 2342, the orthographic projection of the ventilation portion 23421 of one second heat dissipation fin 2342 covers the orthographic projection of the ventilation portion 23421 of the other second heat dissipation fin 2342, and part of the air may smoothly pass through the ventilation portion 23421 and flow toward the first heat dissipation fin 2341.

The ventilation portions 23421 of adjacent second heat dissipation fins 2342 communicate staggered, that is, among two adjacent second heat dissipation fins 2342, the orthographic projection of the ventilation portion 23421 of one second heat dissipation fin 2342 covers part of the orthographic projection of the ventilation portion 23421 of the other second heat dissipation fin 2342, or the orthographic projections of the ventilation portions 23421 of two adjacent second heat dissipation fins 2342 do not intersect. Part of the air may flow along the extension direction of the second heat dissipation fin 2342.

Two adjacent second heat dissipation fins 2342 may have a straightly communicated ventilation portion 23421 and a staggered communicated ventilation portion 23421, and the structure is more diverse.

When a plurality of second heat dissipation fins 2342 are provided, the cross-sectional area of the ventilation portion 23421 may be gradually reduced in the direction from the outside of the evaporator 230 to the first heat dissipation fin 2341, and the amount of inflow air passing through the ventilation portion 23421 in the direction of the first heat dissipation fin 2341 is reduced. The reduction in the cross-sectional area of the ventilation portion 23421 has little effect on the fluidity of the air, and the heat dissipation area of the second heat dissipation fin 2342 is also ensured.

The ventilation portion 23421 comprises at least one of a closed-loop through hole and a through hole with an opening. The structure of the ventilation portion 23421 is diverse and easy to process.

The ventilation portion 23421 has a shape of at least one of a rectangle, a circle, an ellipse, a trapezoid and a triangle. The shape of the ventilation portion 23421 is diverse and the structure is simple.

The ventilation portion 23421 has a shape of at least one of a closed rectangle, circle, ellipse, trapezoid and triangle, or the shape of the ventilation portion 23421 is at least one of a rectangle, circle, ellipse, trapezoid and triangle with an opening, such as a rectangle with opened one end, a circle with a notch, an ellipse with a notch, etc.

The shape of the ventilation portion 23421 is not limited to the aforementioned shapes, and the specific shape of the ventilation portion 23421 may be provided as required.

The first air inlets 201 are provided at two sides of the evaporator 230, and a plurality of first heat dissipation fins 2341 are provided in parallel to form the first heat dissipation portion, the second heat dissipation fins 2342 are symmetrically provided at two sides of the first heat dissipation portion, and the evaporator 230 is provided with ventilation portions 23421 at positions corresponding to the two first air inlets 201 to ensure that part of the inflow air of the two first air inlets 201 may be branched through the ventilation portions 23421.

As shown in FIG. 13, two sides of the air duct assembly 200 are provided with air return components 430two sides, and the air return components 430 communicate with the first air inlet 201, the air enters from two sides of the air duct assembly 200two sides.

The first heat dissipation fin 2341 and the second heat dissipation fin 2342 are provided above the drain plate 100 to receive the defrosted water of the evaporator 230 through the drain plate 100. The structure is simple and convenient for mounting the evaporator 230.

The evaporator 230 may further be provided with a gravity sensor, and the weight change of the evaporator 230 may be obtained through the gravity sensor to determine whether the evaporator 230 needs to be defrosted based on the weight change. The evaporator 230 may also be provided with a vibrator, which provides a vibration force and may assist in defrosting.

The heat structure for defrosting inside the air duct assembly 200 is described below.

As shown in FIG. 20, in some cases, a first heater 231 is provided above the drain plate 100, that is, the first heater 231 is provided between the drain plate 100 and the evaporator 230. When the evaporator 230 needs to be defrosted, the first heater 231 is turned on, and the heat generated by the first heater 231 is used to heat the frost attached to the surface of the evaporator 230. In some cases, the heat dissipation fin 234 of the evaporator 230 is provided with a snap-fit slot for mounting the first heater 231, the first heater 231 is fixed to the heat dissipation fin 234 through the snap-fit slot, and the snap-fit slot may be provided at a lower position of the heat dissipation fin 234 the first heater 231 is located between the drain plate 100 and the heat exchange tube 233. In this case, the first heater 231 is easy to be mounted and has a good defrosting effect.

The heat structure for defrosting is not limited to being provided between the drain plate 100 and the evaporator 230. In some cases, the heat structure may be provided between the heat exchange tubes 233 of the evaporator 230. For example, the heat structure is a second heater 232 inserted into the heat dissipation fins 234 of the evaporator 230. The insert structure is simple and easy to mount, which helps to improve the mounting efficiency. The heat dissipation fin 234 is provided with a mount hole 2343, and the second heater 232 is inserted into the mount hole 2343. The structure is simple and easy to disassemble and assemble.

The second heater 232 extends from a first end to a second end of the evaporator 230, and the first end and the second end are opposite ends to fully provide heat for the evaporator 230. The second end and the first end are two ends that form an included angle with the extension direction of the heat dissipation fin 234, such as a left end and a right end of the evaporator 230.

The second heater 232 may be inserted between two rows of heat exchange tubes 233 to uniformly heat and defrost the upper and lower rows of heat exchange tubes 233. The heat exchange efficiency between the second heater 232 and the heat exchange tubes 233 and the second heater 232 and the heat dissipation fin 234 at the heat exchange tubes 233 is higher, and the heating and defrosting efficiency may also be improved.

A plurality of second heaters 232 are distributed along the height direction of the evaporator 230 to heat multiple positions of the evaporator 230.

The second heater 232 comprises a plurality of fixedly connected heat members The heat members are fixedly connected as a whole and directly plugged into the heat dissipation fin 234 during the assembly process, which are easy to assemble and have high assembly efficiency.

The second heater 232 comprises a plurality of independent heat members, and the positions of the heat members are flexible, the heat members are easily replaced independently, and it is also more convenient to disassemble and assemble the heat members.

When the second heater 232 comprises a plurality of independent heat members, the heat members may be staggered along the height direction of the evaporator 230, which may reduce the number of heat members and fully defrost the evaporator 230.

When no heat structure is provided between the drain plate 100 and the evaporator 230, the evaporator 230 may be directly provided on the drain plate 100, which may effectively reduce the spacing between the evaporator 230 and the drain plate 100, and play a role in slowing down the air speed and improving the heat exchange efficiency.

The heat structure may be provided as a heat member 160, and the heat member 160 is attached to the surface of the drain plate 100. The heat member 160 may be integrated with the drain plate 100 into a unitary structure. The drain plate 100 with the heat member 160 may be mounted below the evaporator 230 of various structures. The drain plate 100 may not only receive and discharge defrosted water, but also heat and defrost and has dual functions. The drain plate 100 is mounted in the air duct assembly 200, which may reduce the height of the air duct assembly 200.

In an embodiment, the drain plate 100 with the heat member 160 may be mounted under the horizontally arranged evaporator 230. Alternatively, the drain plate 100 with the heat member 160 may be provided below the evaporator 230 vertically mounted in the cabinet 400. The application scenario of the drain plate 100 is not limited here.

The heat member 160 may be integrated with the drain plate 100 of any of the above-mentioned embodiments. Alternatively, the heat member 160 may be integrated with other drain plates 100 that may receive and discharge defrosted water, and the drain plate 100 may be widely used in various occasions.

The heat member 160 covers the lower surface of the drain plate 100, the upper surface of the drain plate 100 is used to receive defrosted water, and the heat member 160 located at the lower surface of the drain plate 100 may avoid direct contact with water, which may avoid leakage accidents due to circuit failure, and have better safety performance of the refrigeration apparatus.

The heat member 160 may also cover the upper surface of the drain plate 100 while ensuring the waterproof performance of the heat member 160.

The heat member 160 may be a heat wire or a heat film disposed at the surface of the drain plate 100.

The heat member 160 is described below by taking the heat member being a heat film as an example.

The heat member 160 comprises an insulation layer and a composite heat layer provided at a lower surface of the insulation layer, the insulation layer is connected to a lower surface of the drain plate 100, and the drain plate 100 is insulated from the composite heat layer by the insulation layer, which may reduce the risk of electrical leakage. The material of the drain plate 100 is not limited. The drain plate 100 may be made of steel, which is easy to process and may also ensure the heat conduction effect of the drain plate 100.

The heat member 160 comprises the composite heat layer, the drain plate 100 is an insulation and heat conduction structure, and the composite heat layer is provided at the lower surface of the drain plate 100. The drain plate 100 has both heat conduction and insulation functions and the insulation layer may be omitted, which makes the processing process of the drain plate 100 simpler, and helps to improve production efficiency. The drain plate 100 may be a structure composed of ceramic and glass fiber materials.

The composite heat layer of the heat member 160 may be a graphene heat layer, a nano heat layer or a carbon fiber heat layer or a heat layer compounded of a plurality of electric heating materials. When the composite heat layer is energized, the electrical energy may be converted into the thermal energy of the heat member 160 to provide heat for defrosting. The composite heat layer being a graphene heat layer is taken as an example, and the graphene heat layer is a hexagonal planar film composed of carbon atoms in a honeycomb lattice, which is only one atom thick, and the thickness of the heat member 160 may be controlled.

In an embodiment, when the heat member 160 is provided at the lower surface of the drain plate 100, an insulation and heat-isolation layer is further required to be provided below the composite heat layer to reduce the diffusion of heat downward and ensure the thermal efficiency of heating. The composite heat layer and the insulation layer, the composite heat layer and the drain plate 100, and the insulation layer and the composite heat layer are bonded by a heat-conduction adhesive layer. The heat-conduction adhesive layer may ensure a reliable connection between the layers while ensuring a heat-conduction effect.

The heat member 160 comprises a plurality of heat zones distributed along a predetermined direction. The heat power per unit area of the heat zone along the predetermined direction gradually increases. The heat power of the corresponding heat zone may be adjusted based on the different amounts of frost at different positions, the frost may be quickly and sufficiently defrosted and the power consumption may be reduced.

When the composite heat layer is a graphene heat layer, the graphene heat layer in different heat zones has different grid distributions, and the graphene heat layer in different heat zones has different resistance distributions. Two graphene heat layers with different resistances may be distributed at the lower surface of the drain plate 100. Any number of graphene heat layers with different resistances may also be distributed. In addition, the graphene heat layers with different resistances may be connected in series or in parallel, and may also be connected to different circuits.

The heat member 160 in the above embodiment is applied to the above air duct assembly 200 for defrosting the evaporator 230, which may reduce the space occupied by the heater, reduce the height of the air duct assembly 200, and further reduce the volume of the air duct assembly 200. The refrigeration apparatus with such an air duct assembly 200 may appropriately increase the storage space, which plays a role in expanding the capacity of the refrigeration apparatus.

The drain plate 100 with the heat member 160 in the above embodiment may be used in combination with at least one of the above-mentioned first heater 231 and second heater 232 to improve the defrosting efficiency.

In an embodiment, the above-mentioned heat member 160 may be applied to the drain plate 100 of the above-mentioned embodiments, but it is not limited thereto. The heat member 160 may also be applied to drain plates of other structures.

The above-mentioned heat structure for defrosting needs to be electrically connected to the power supply outside the air duct assembly 200 through a wire. The wire may be routed through the wiring hole opened at the above-mentioned fan hood 240. The structure is simple and easy to assemble.

The structure of the partition component 210 is described below.

The partition component 210 and the air duct component 220 limit the first cavity body 282, the air inlet and the exhaust port, and the evaporator 230 and the drain plate 100 are provided inside the first cavity body 282. The inflow air of the air inlet is discharged from the exhaust port after heat exchange in the first cavity body 282, and the exhaust port sends the air into the compartment to provide a refrigeration environment for the refrigeration apparatus. When the air inlet comprises the first air inlet 201 and the second air inlet 202, the first air inlet 201 and the second air inlet 202 comprise inflow air having different temperatures.

The partition component 210 may be fixedly connected to the box liner body 300, for example, the edge of the partition component 210 is fixed to the box liner body 300 by welding, clamping or fasteners. As shown in FIG. 6 and FIG. 20, the partition component 210 comprises a first plate body 211 and a second plate body 212, the first plate body 211 and the second plate body 212 are provided with a first thermal insulation layer 213, and the first thermal insulation layer 213 is detachably provided between the first plate body 211 and the second plate body 212, or the first thermal insulation layer 213 is integrally foam molded with the first plate body 211 and the second plate body 212.

When the first thermal insulation layer 213 is integrally foam molded with the first plate body 211 and the second plate body 212, the first plate body 211 and the second plate body 212 may be fixedly mounted with the box liner body 300, the first thermal insulation layer 213 and the thermal insulation layer of the cabinet 400 are integrally foam molded, and the hermetic performance between the partition component 210 and the box liner body 300 is better, and the air circulation between the first compartment 410 and the second compartment 420 is avoided.

Referring to FIG. 6 and FIG. 20, the partition component 210 further comprises a third plate body 214, the third plate body 214, the first plate body 211 and the second plate body 212 are limited to form mount space, and the portion limiting the mount space may be referred to as the mount portion. The third plate body 214 is located in front of the air duct assembly 200, the mount space is located in front of the partition component 210, and the mount space is used to mount functional components, such as a controller, a light module, an interactive module, a display module and the like. When the second air inlet 202 is provided at the front side of the air duct assembly 200, the portion (installation portion) of the partition component 210 that limits the mount space is located at the front end of the second air inlet 202, the portion (mount portion) that limits the mount space plays a role in covering the second air inlet 202 at the front end, the second air inlet 202 is hidden, and the lower part of the second air inlet 202 communicates with the second compartment 420.

In an embodiment, the second air inlet 202 is not limited to being provided at the front side of the air duct assembly 200, and the second air inlet 202 may also be provided at a front position of the lower side of the air duct assembly 200.

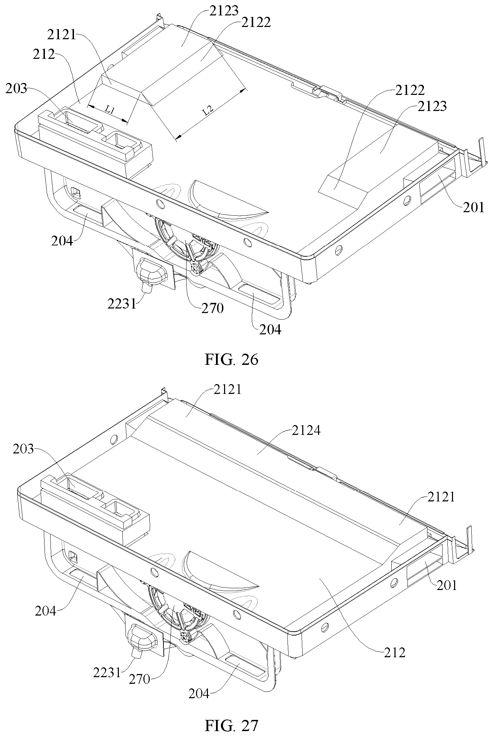

Referring to FIG. 26 to FIG. 28, the partition component 210 and the air duct component 220 limit the first cavity body 282, the first air inlet 201, the second air inlet 202 and the exhaust port, and the first air inlet 201 and the second air inlet 202 comprise inflow air having different temperatures. The first air inlet 201 is located at a first side of the air duct assembly 200, the second air inlet 202 is located at a second side of the air duct assembly 200, the first side is adjacent to the second side, or the first air inlet 201 and the second air inlet 202 are located on the same side. The partition component 210 is provided with an inner recess recessed toward the inner side of the partition component 210, and the inner recess is suitable for guiding a portion of the inflow air from at least one of the first air inlet 201 and the second air inlet 202 to be branched into the inner recess. That is, a portion of the inflow air from at least one of the first air inlet 201 and the second air inlet 202 is branched to the respective corresponding inner recess to reduce the amount of cross-contact air in the inflow air from the first air inlet 201 and the second air inlet 202, which reduces the amount of frost in the cross-contact area of the inflow air, prolongs the duration of the interval between two defrosting times, and reduces the number of defrosting times, and decreases the power consumption of defrosting.

The first air inlet 201 and the second air inlet 202 being located at different sides and their air inflow directions intersect is taken as an example. During the air inflow process, part of the air from the first air inlet 201 is branched along the extension direction of the corresponding inner recess, and part continues to flow along the air inflow direction. When air flows into the first air inlet 201 and the second air inlet 202 simultaneously, the air that continues to flow along the air inflow direction intersects with the inflow air of the second air inlet 202, and the amount of cross-flowing air between the inflow air of the first air inlet 201 and the inflow air of the second air inlet 202 is decreased. The principle of providing the inner recess in the corresponding area of the second air inlet 202 is the same and will not be repeated here.

The first air inlet 201 and the second air inlet 202 being located on the same side (such as both located on the front side) and having the same air inflow direction is taken as an example. The extension direction of the inner recess is consistent with the extension direction of the corresponding air inlet, part of the inflow air of the first air inlet 201 flows along the extension direction of the corresponding inner recess, and the other part of the inflow air of the first air inlet 201 continues to flow along its flow direction.

Referring to FIG. 26, the inner recess comprises a first inner recess 2121, the first inner recess 2121 extends in terms of a first preset width *L1* along the second side of the partition component 210 to the third side by a first preset length L2, the second air inlet 202 is located on the second side. The third side is a side not adjacent to the second side, and the third side may be a side where the exhaust port is located, the first inner recess 2121 is close to the edge of the first side of the partition component 210, and the first air inlet 201 is located on the first side.

A portion of the inflow air entering the first cavity body 282 from the first air inlet 201 flows along the air inflow direction of the first air inlet 201 and crosses with the inflow air of the second air inlet 202, and another portion of the inflow air entering the first cavity body 282 from the first air inlet 201 flows along the extension direction of the first inner recess 2121. The first inner recess 2121 plays a role in guiding and branching to reduce the amount of air that intersects the inflow air of the first air inlet 201 and the inflow air of the second air inlet 202, and the frosted amount is reduced.

The first preset width *L1* may be provided to be less than or equal to the minimum distance from the first air inlet 201 to the second air inlet 202; the first preset length L2 may be provided to be less than or equal to the length of the evaporator 230, and the length direction of the evaporator 230 is the direction from the air inlet to the exhaust port.

Referring to FIG. 26, the first inner recess 2121 is provided with a first top surface 2123 and a first guide surface 2122 connected to the first top surface 2123. The first guide surface 2122 is inclined downward in a direction away from the first top surface 2123, the first guide surface 2122 is located at a side away from the first air inlet 201, the first guide surface 2122 guides the air toward the exhaust port to prevent the air from accumulating in the groove limited by the first inner recess 2121, and the circulation effect of the air is ensured.

When the first side of the first cavity body 282 comprises two or more side surfaces, such as the first side provides opposite left and right sides, the first air inlets 201 are provided at the left and right sides of the air duct assembly 200, the first inner recesses 2121 are symmetrically provided at two sides of the partition component 210, and each first inner recess 2121 corresponds to a first air inlet 201 to ensure that part of the inflow air of each first air inlet 201 is branched through the first inner recess 2121.

The first guide surfaces 2122 may be provided at the rear side, left side or right side of the first inner recess 2121. As shown in FIG. 26, a first guide surface 2122 is located on the rear side of the first inner recess 2121, and another first guide surface 2122 is located on the left side of the first inner recess 2121. FIG. 26 illustrates the first guide surfaces 2122 at different positions. In actual applications, the two first inner recesses 2121 are generally symmetrically provided.

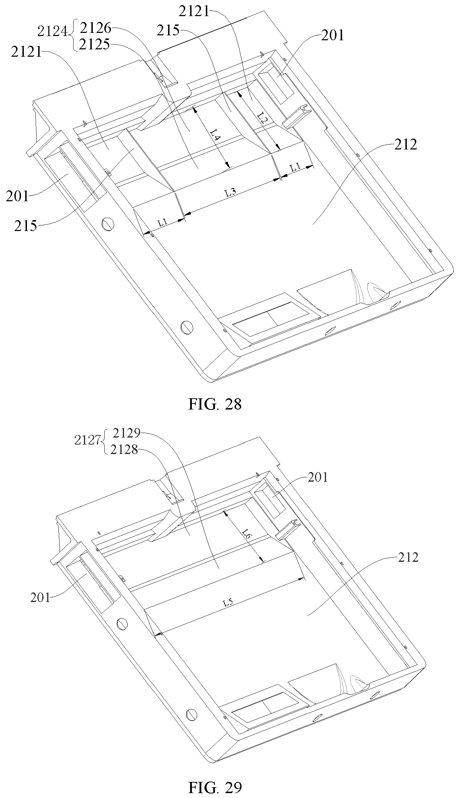

Referring to FIG. 27 and FIG. 28, the inner recess comprises a second inner recess 2124, one side of the second inner recess 2124 faces the second air inlet 202, and the second inner recess 2124 may guide part of the inflow air of the second air inlet 202 to flow along the groove limited by the second inner recess 2124. The second air inlet 202 also branches part of the inflow air, which may reduce the amount of air where the inflow air of the first air inlet 201 and the inflow air of the second air inlet 202 intersect, and also reduce the frosted amount.

The second inner recess 2124 extends in terms of a second preset width *L3* along the second side of the partition component 210 to the third side by a second preset length L4, the second preset length L4 is less than the length of the evaporator 230 in the first cavity body 282, and the length of the evaporator 230 is the length from the second side to the third side. The second side and the third side here may refer to the above explanation. The length of the second inner recess 2124 is less than the length of the evaporator 230 to prevent the air in the first inner recess 2121 from flowing directly to the exhaust port, which ensures that the air in the first inner recess 2121 is discharged from the exhaust port after heat exchange with the evaporator 230.

The second inner recess 2124 is provided with a second top surface 2126 and a second guide surface 2125 connected to the second top surface 2126, the second guide surface 2125 is inclined downward in a direction away from the second top surface 2126, the second guide surface 2125 is toward the side where the exhaust port is located, and the air is guided downward by the inclined surface of the second guide surface 2125 and the air may fully flow to the evaporator 230.

In some cases, the first inner recess 2121 may be used in combination with the second inner recess 2124, that is, the partition portion 210 is provided with the first inner recess 2121 and the second inner recess 2124 simultaneously. In this case, the second inner recess 2124 is spaced from the first inner recess 2121 by the third wall plate 215, and the first inner recess 2121 and the second inner recess 2124 have the same recessed depth, which is simple in structure and convenient for processing.

In the case that the partition portion 210 is provided with the first inner recess 2121 and the second inner recess 2124 simultaneously, the first preset length L2 is greater than or equal to the second preset length L4. The first inner recess 2121 fully guides the inflow air of the first air inlet 201 toward the direction of the exhaust port, the second inner recess 2124 guides the inflow air of the second air inlet 202 toward the direction of the exhaust port, and the heat exchange effect between the air and the evaporator 230 may also be ensured.

In an embodiment, the air in the second inner recess 2124 may further comprise mixture of the inflow air of the first air inlet 201 and the inflow air of the second air inlet 202.

The evaporator 230 comprises a heat exchange tube 233 and a heat dissipation fin 234 connected to the heat exchange tube 233, and the heat dissipation fin 234 extends from the side where the second air inlet 202 is located to the side where the exhaust port is located. The heat dissipation fin 234 may guide the air to flow from the side where the air inlet is located to the side where the exhaust port is located.

The heat dissipation fin 234 is provided with a protrusion, and the protrusion extends into the second inner recess 2124 to ensure that the air in the second inner recess 2124 may fully exchange heat with the heat dissipation fin 234.

Referring to FIG. 29, the partition portion 210 is provided with a third inner recess 2127, a first side of the third inner recess 2127 faces the first air inlet 201, and a second side of the third inner recess 2127 faces the second air inlet 202, and the first air inlet 201 and the second air inlet 202 are located on two adjacent sides, the third inner recess 2127 is located in an intersection area corresponding to the first air inlet 201 and the second air inlet 202. The third inner recess 2127 increases the space of the air inlet intersection area between the first air inlet 201 and the second air inlet 202, increases the frost receiving space, prolongs the time that the air inlet end may be inlet, and reduces the number of defrosting times, which may prolong the defrosting cycle and save defrosting power consumption.

The first air inlet 201 and the second air inlet 202 are located on two adjacent sides. As shown in FIG. 5, the first air inlets 201 are located on the left and right sides of the air duct assembly 200 and communicate with the first compartment 410 through the air return component 430, the second air inlets 202 are located on the front side of the air duct assembly 200, and the first air inlets 201 and the second air inlets 202 are located at the front position of the air duct assembly 200.

The first air inlet 201 and the second air inlet 202 may also be located on two opposite sides (not shown in the figure), such as the first air inlets 201 are located at the left side of the air duct assembly 200, and the second air inlets 202 are located at the right side of the air duct assembly 200. In this case, the third inner recess 2127 may be used to provide a larger intersection space for the inflow air of the first air inlet 201 and the inflow air of the second air inlet 202. The first air inlet 201 and the second air inlet 202 may also be located on two opposite sides, or the distance between the first air inlets 201 and the second air inlets 202 may be increased to appropriately reduce the air volume of cross heat exchange.

The third inner recess 2127 extends in term of a preset width *L5* from the side where the second air inlet 202 is located to the side where the exhaust port is located by a third preset length L6, the third preset length L6 is less than the length of the evaporator 230 in the first cavity body 282, and the length of the evaporator 230 is the length from the side where the second air inlet 202 is located to the side where the exhaust port is located.

Referring to FIG. 29, the width direction of the third inner recess 2127 is perpendicular to the direction from the second air inlet 202 to the exhaust port, the third preset width *L5* is the dimension in this direction, and the third preset length L6 is the length from the second air inlet 202 to the exhaust port.

The third inner recess 2127 is provided with a third top surface 2128 and a third guide surface 2129 connected to the third top surface 2128, the third guide surface 2129 is inclined downward in a direction away from the third top surface 2128, and the third guide surface 2129 faces the side where the exhaust port is located. The third guide surface 2129 guides the air in the third inner recess 2127 toward the evaporator 230 this part of the air is discharged after sufficient heat exchange.

Based on the above embodiments of the drain plate 100, the fan hood 240, the fan 270, the air duct component 220, the heat structure for defrosting, and the partition component 210, the following structure of the air duct assembly 200 is provided, but the air duct assembly 200 is not limited to the following structure.

In combination with FIG. 1 to FIG. 13, the air duct assembly 200 comprises a partition component 210 and an air duct component 220. The partition component 210 and the air duct component 220 are provided with a first cavity body 282, air inlets and an exhaust port that communicate with each other, the air inlet is divided into a first air inlet 201 and a second air inlet 202. A drain plate 100 is provided in the first cavity body 282, the drain plate 100 is provided with a water guide portion recessed downwardly relative to the top surface of the drain plate 100, the water guide portion extends to two sides of a preset surface to the edge of the drain plate 100 and an opening 170 is formed at the edge of the drain plate 100. The opening 170 faces the side where the first air inlet 201 is located, part of the inflow air of the first air inlet 201 passes through the opening 170 and flows into the first cavity body 282 along the extension direction of the water guide portion. Part of the inflow air of the first air inlet 201 is guided into the first cavity body 282 through the opening 170 and along the extension direction of the water guide part, part of the inflow air of the first air inlet 201 may be branched and the amount of air that cross-contacts with the inflow air of the second air inlet 202 is reduced, the frost condensed due to the cross-contact between the inflow air of the first air inlet 201 and the inflow air of the second air inlet 202 is reduced, the number of defrosting times is decreased, the defrosting cycle is prolonged, the power consumption required for defrosting is reduced, and the power consumption of the refrigeration apparatus is reduced.

The water guide portion is at least one of the structures shown in FIG. 1 to FIG. 13, that is, the water guide portion may be at least one of the second water guide portion 130 and the third water guide portion 140.

In an embodiment, the air duct assembly 200 further comprises a first drain component 260 located on the first side, the first drain component 260 communicates with the opening 170 of the drain plate 100, and the first drain component 260 is provided with a drain port. The first drain component 260 has the functions of drainage and air intake simultaneously.

In an embodiment, the air duct assembly 200 further comprises a fan hood 240, the fan hood limits a second cavity body 281, a fan 270 is provided in the second cavity body 281, a first included angle α₁ is formed between a rotation axis of the fan 270 and the vertical direction, the fan hood 240 is provided with a vent opening 244, and the inlet of the fan 270 faces the vent opening 244. The fan 270 is provided horizontally in the fan hood 240, which may reduce the height of the fan 270, and decrease the height of the air duct assembly 200, and facilitating the mounting of a drawer below the air duct assembly 200.

In an embodiment, the evaporator 230 is provided in the first cavity body 282, the drain plate 100 is located below the evaporator 230, and an included angle between the evaporator 230 and the horizontal direction is less than or equal to a preset angle, or the evaporator 230 is parallel to the horizontal direction. When the evaporator 230 is horizontally provided, the downward tilt angle of the evaporator 230 may be less than or equal to 7° or horizontal, the space occupied by the evaporator 230 in the height direction is reduced, and the height of the air duct assembly 200 is also reduced accordingly, which helps to increase the space of the refrigeration apparatus.

The partition component 210, the air duct component 220, the first drain component 260, the fan 270, the fan hood 240, the drain plate 100, the evaporator 230 and other components may all adopt the structures in the above-mentioned embodiments, which are not repeated here.

In combination with FIG. 10 to FIG. 25, the air duct assembly 200 comprises a partition component 210, an air duct component 220, an evaporator 230 and a drain plate 100, the partition component 210 and the air duct component 220 form a first cavity body 282, a first air inlet 201, a second air inlet 202 and an exhaust port that communicate with each other, the first air inlet 201 is located on a first side of the first cavity body 282, the second air inlet 202 is located on a second side of the first cavity body 282, and the first side is adjacent to the second side. The evaporator 230 is provided in the first cavity body 282; the drain plate 100 is located in the first cavity body 282; the drain plate 100 is located below the evaporator 230, and is provided with a water guide portion and a drain portion 110 recessed downwardly relative to the top surface of the drain plate 100, the drain portion 110 is provided with an outlet 114 communicating with the water guide portion. A fifth included angle is formed between the extension direction of the drain portion 110 and the extension direction of the water guide portion, the end of the water guide portion is provided with an opening 170 and the opening 170 faces the first air inlet 201, and the air of the first air inlet 201 flows into the first cavity body 282 along the extension direction of the water guide portion. The water guide portion plays a role in guiding the inflow air of the first air inlet 201, a part of the inflow air of the first air inlet 201 flows into the first cavity body 282 along the water guide portion, which reduces the amount of cross-contact inflow air between the first air inlet 201 and the second air inlet 202 and reduces the frost condensed due to the contact of air with different temperatures, the defrosting interval is decreased, the number of defrosting times is reduced, the power consumption of defrosting is saved and both electricity and energy are saved.

The structure of the water guide part may be the third water guide portion 140.

In an embodiment, the outlet 114 of the drain plate 100 and the exhaust port are located on the same side of the first cavity body 282, and the heat of the defrosted water flowing to the outlet 114 of the drain plate 100 may play a role in defrosting the fan 270 on the same side.

In an embodiment, both the top surface of the drain plate 100 and the bottom surface of the evaporator 230 are inclined downward at a preset angle, or both the top surface of the drain plate 100 and the bottom surface of the evaporator 230 are parallel to the horizontal plane. When the evaporator 230 is provided horizontally, and the downward tilt angle of the evaporator 230 may be less than or equal to 7° or horizontal, the space occupied by the evaporator 230 in the height direction is reduced, and the height of the air duct assembly 200 is also reduced, which helps to increase the space of the refrigeration apparatus.

The air duct assembly 200 further comprises a first drain component 260 located on the first side, the first drain component 260 surrounds the opening 170 and communicates with the opening 170, and the first drain component 260 is provided with a first drain port 262. The first drain component 260 may be provided in a foaming layer of the cabinet 400 to increase the space of the compartment.

The air duct assembly 200 further comprises a fan hood 240, the fan hood 240 limits the second cavity body 281, a fan 270 is provided in the second cavity body 281. A first included angle α₁ is formed between the rotation axis of the fan 270 and the vertical direction, the fan hood 240 is provided with a vent opening 244, and the inlet of the fan 270 faces the vent opening 244. The fan 270 is horizontally provided in the fan hood 240, and the height of the fan 270 is reduced, and the overall height of the air duct assembly 200 is decreased.

The partition component 210, the air duct component 220, the first drain component 260, the fan 270, the fan hood 240, the drain plate 100, the evaporator 230 and other components may all adopt the structures in the above embodiments, which are not repeated here.

In combination with FIG. 10 to FIG. 25, the air duct assembly 200 comprises a partition component 210, an air duct component 220, an evaporator 230 and a drain plate 100. The partition component 210 and the air duct component 220 form a first cavity body 282, a first air inlet 201, a second air inlet 202 and an exhaust port that communicate with each other. The first air inlet 201 is located on the first side of the first cavity body 282, the second air inlet 202 is located on the second side of the first cavity body 282, and the first side is adjacent to the second side. The evaporator 230 is provided in the first cavity body 282. The drain plate 100 is located in the first cavity body 282; the drain plate 100 is located below the evaporator 230, the drain plate 100 is provided with a water guide portion and an outlet 114, the water guide portion is recessed relative to the top surface of the drain plate 100 and communicates with the outlet 114, and the extension direction of the water guide portion forms a fourth included angle with the air outflow direction of the first cavity body 282.

The water guide portion may be at least one of the second water guide portion 130 and the third water guide portion 140.

The included angle between the evaporator 230 and the horizontal direction is less than or equal to a preset angle, or the evaporator 230 is provided along the horizontal direction. When the evaporator 230 is provided horizontally, its downward tilt angle may be less than or equal to 7° or horizontal, and the space occupied by the evaporator 230 in the height direction is reduced accordingly, which helps to increase the space of the refrigeration apparatus.

The air duct assembly 200 further comprises a fan 270 located on one side of the first cavity body 282, and the outlet 114 of the drain plate 100 faces the side where the fan 270 is located. The outlet 114 of the drain plate 100 and the inlet of the fan 270 are staggered to prevent water from flowing toward the fan 270.

The second air inlet 202 is located at the front side of the air duct assembly 200 and communicates with the second compartment 420, the first air inlet 201 is located at least one of the left side and the right side of the air duct assembly 200 and is close to the front end, and the first air inlet 201 communicates with the first compartment 410 to return air through the front end of the air duct assembly 200.

The partition component 210, the air duct component 220, the first drain component 260, the second drain component 290, the fan 270, the fan hood 240, the drain plate 100, the evaporator 230 and other components may all adopt the structures in the above embodiments, which are not repeated here.

In combination with FIG. 1 to FIG. 25, the air duct assembly 200 comprises a partition component 210, an air duct component 220, a fan 270, an evaporator 230 and a drain plate 100. The partition component 210 and the air duct component 220 are provided with a first cavity body 282, a first air inlet 201, a second air inlet 202 and an exhaust port that communicate with each other, the first air inlet 201 is located on a first side of the first cavity body 282, and the second air inlet 202 is located on a second side of the first cavity body 282, and the first side is adjacent to the second side. The evaporator 230 is provided in the first cavity body 282; the drain plate 100 is located in the first cavity body 282; the drain plate 100 is located below the evaporator 230 to receive defrosted water, and the drain plate 100 is provided with a water guide portion recessed downwardly relative to the top surface of the drain plate 100, and the water guide portion extends to two sides of a preset surface to the edge of the drain plate 100 an opening 170 suitable for drainage is formed at the edge of the drain plate 100, and the opening 170 faces the first side. The fan 270 is located on the third side of the first cavity body 282. That is, the drainage position of the fan 270 and the drain plate 100 are located on different sides, which may reduce the space occupied by the side where the fan 270 is located, and the compartment space in the refrigeration apparatus is increased to provide a large-capacity refrigeration apparatus.

The air duct assembly 200 further comprises a first drain component 260 located at the first side, the drain channel of the first drain component 260 communicates with the opening 170, and the first drain component 260 is provided with a water outlet. The first drain component 260 may be formed in the foam layer of the cabinet 400, which does not occupy the space of the compartment, and effectively expands the capacity of the compartment. The opening 170 side of the drain plate 100 is drained through the first drain component 260. The structure of the first drain component 260 may refer to the above content.

The included angle between the evaporator 230 and the horizontal direction is less than or equal to the preset angle. The evaporator 230 is provided horizontally and its downward tilt angle may be less than or equal to 7°. The space occupied by the evaporator 230 in the height direction is reduced, and the height of the air duct assembly 200 is also reduced, which helps to increase the space of the refrigeration apparatus.

The second air inlet 202 is located at the second side of the first cavity body 282, the first side is adjacent to the second side, the second air inlet 202 and the first air inlet 201 have different temperatures of inflow air, and the compartments communicating with the first air inlet 201 and the second air inlet 202 have different ambient temperatures.

The first side is at least one of the left side and the right side, and the first air inlet 201 and the first drain component 260 are located at least one of the left side and the right side. The second side is the front side, and the second air inlet 202 is located at the front side, the third side is the rear side, and the fan 270 is located at the rear side.

When the first compartment 410 is a refrigeration compartment and the second compartment 420 is a freezer compartment, the first air inlets 201 communicating with the refrigeration compartment are provided at the left and right sides of the air duct assembly 200, the second air inlet 202 communicating with the freezer compartment is provided at the front side of the air duct assembly 200. The front end of the second air inlet 202 is blocked by the partition component 210, the second air inlet 202 communicates with the freezer compartment through the bottom of the partition component 210, the fan 270 is provided at the rear side of the air duct assembly 200, and the fan 270 discharges the air from the exhaust port.

The air duct assembly 200 further comprises a fan hood 240 provided between the partition component 210 and the air duct component 220, the fan hood 240 is provided with a second cavity body 281, a fan 270 is provided in the second cavity body 281, the fan hood 240 is provided with a vent opening 244, the inlet of the fan 270 faces the vent opening 244, and the fan hood 240 plays a role in protecting the fan 270.

A first included angle α1 is formed between the rotation axis of the fan 270 and the vertical direction, which may reduce the size occupied by the fan 270 in a height direction. The vent opening 244 is located above the fan 270, the fan 270 is supported by the air duct component 220, and the top of the fan 270 corresponds to the position of the evaporator 230. The central axis of the vent opening 244 is colinear with the rotation axis of the fan 270 to ensure that the air in the first cavity body 282 is smoothly discharged by the fan 270 from the exhaust port.

The fan hood 240 is provided with a flow guide surface 2411 located above the fan 270 and facing the fan 270, the flow guide surface 2411 is inclined upward or downward along the side facing the drain plate 100, and the guide surface 2411 may play a role in collecting water vapor and discharging the collected water from one side of the fan hood 240.

The partition component 210, the air duct component 220, the first drain component 260, the fan 270, the fan hood 240, the drain plate 100, the evaporator 230 and other components may all adopt the structures in the above embodiments, which are not repeated here.

Referring to FIG. 1 to FIG. 13, the air duct assembly 200 comprises a partition component 210, an air duct component 220, a fan 270, an evaporator 230 and a drain plate 100. The partition component 210 and the air duct component 220 are provided with a first cavity body 282, a first air inlet 201, a second air inlet 202 and an exhaust port that communicate with each other, the first air inlet 201 is located on a first side of the first cavity body 282, and the second air inlet 202 is located on a second side of the first cavity body 282, and the first side is adjacent to the second side. The evaporator 230 is provided in the first cavity body 282. The drain plate 100 is located in the first cavity body 282. The drain plate 100 is located below the evaporator 230, the drain plate 100 is provided with an opening 170 and an outlet 114, the opening 170 faces the first side, and the outlet 114 faces the third side. The first drain component 260 is located on the first side and is provided with a drain channel communicating with the opening 170, the water on the drain plate 100 is guided into the first drain component 260 through the opening 170. The second drain component 290 is located on the third side and is provided with a water guide channel communicating with the outlet 114. The first drain component 260 cooperates with the second drain component 290, the air duct assembly 200 may drain water from different sides, and the drainage paths are increased, which helps the defrosted water received by the drain plate 100 to be discharged from multiple directions, and may improve the defrosting and drainage efficiency.

The air duct assembly 200 further comprises a fan hood 240 and a fan 270 provided in the fan hood 240, and a second drain component 290 is provided inside or below the fan hood 240. The fan hood 240 is provided with a vent opening 244, a first included angle is formed between the rotation axis of the fan 270 and the vertical direction, and the inlet of the fan 270 faces the vent opening 244. The fan 270 is mounted horizontally, which helps to reduce the height of the air duct assembly 200.

The included angle between the evaporator 230 and the horizontal direction is less than or equal to a preset angle, the evaporator 230 is provided horizontally and its downward tilt angle may be less than or equal to 7°. The space occupied by the evaporator 230 in the height direction is reduced, and the height of the air duct assembly 200 is also reduced accordingly, which helps to increase the space of the refrigeration apparatus.

The partition member 210, the air duct member 220, the first drain component 260, the second drain component 290, the fan 270, the fan hood 240, the drain plate 100, the evaporator 230 and other components may all adopt the structures in the above-mentioned embodiments, which are not repeated here.

Referring to FIG. 10 to FIG. 16, the air duct assembly 200 comprises the partition component 210, the air duct component 220, the fan 270, the evaporator 230 and the drain plate 100. The partition component 210 and the air duct component 220 are provided with a first cavity body 282, an air inlet and an exhaust port that communicate with each other, and the evaporator 230 is provided in the first cavity body 282. The drain plate 100 is located in the first cavity body 282. The drain plate 100 is located below the evaporator 230, the drain plate 100 is provided with a drain portion 110 and a water guide portion, the drain portion 110 is provided with an outlet 114, and the drain portion 110 is recessed relative to the top surface of the drain plate 100. The water guide portion communicates with the drain portion 110, the water guide portion is recessed relative to the top surface of the drain plate 100, and a fifth included angle is formed between the extension direction of the water guide portion and the air outflow direction of the first cavity body 282. The fan hood 240 is provided with a vent opening 244, a second cavity body 281 and a water guide channel, the second cavity body 281 communicates with the first cavity body 282 through the vent opening 244, and the water guide channel communicates with the outlet 114. The fan 270 is located in the second cavity body 281, a first included angle is formed between the rotation axis of the fan 270 and the vertical direction, and the inlet of the fan 270 communicates with the first cavity body 282 through the vent opening 244. The structure of the air duct assembly 200 is more compact by draining water through the fan hood 240 for mounting the fan 270, which reduces the number of parts of the air duct assembly 200 and makes the assembly easier. The fan 270 is provided horizontally, which may also reduce the height of the air duct assembly 200.

The water guide channel is inclined downward in the direction away from the outlet 114 to guide water at the inclined angle, and the water may be quickly and completely discharged.

The included angle between the evaporator 230 and the horizontal direction is less than or equal to a preset angle, the evaporator 230 is provided horizontally and its downward inclination angle may be less than or equal to 7°. The space occupied by the evaporator 230 in the height direction is reduced, and the height of the air duct assembly 200 is also reduced, which helps to increase the space of the refrigeration apparatus.

The air duct component 220 and the partition component 210 are provided with an air inlet and an air outlet communicating with the first cavity body 282, the drain portion 110 extends in the direction from the air inlet to the air outlet, and the water at the outlet 114 of the drain plate 100 is discharged through the water guide channel of the fan hood 240.

The air inlet comprises a first air inlet 201 and a second air inlet 202, the first air inlet 201 and the second air inlet 202 have air inlets of different temperatures, and the first air inlet 201 and the second air inlet 202 are located on different sides of the first cavity body 282. The first air inlet 201 is located on a first side of the first cavity body 282, the second air inlet 202 is located on a second side of the first cavity body 282, the first side is adjacent to the second side, the first air inlet 201 is located near the front side, and air enters the air duct assembly 200 from the front end.

The partition component 210, the air duct component 220, the first drain component 260, the second drain component 290, the fan 270, the fan hood 240, the drain plate 100, the evaporator 230 and other components may all adopt the structures in the above embodiments, which are not repeated here.

Referring to FIG. 1 to FIG. 38, the air duct assembly 200 comprises a partition component 210, an air duct component 220, a fan 270, an evaporator 230, a drain plate 100 and a branch portion. The partition component 210 and the air duct component 220 are formed with a first cavity body 282, an air inlet and an exhaust port that communicate with each other. The evaporator 230 is provided in the first cavity body 282. The drain plate 100 is located in the first cavity body 282. The drain plate 100 is located below the evaporator 230, and the branch portion is provided in at least one of the partition component 210 and the air duct component 220 to guide part of the inflow air of the first air inlet 201 to flow along the guiding direction of the branch portion. The branch portion plays a role in branching part of the inflow air of the first air inlet 201, the amount of air where the inflow air of the first air inlet 201 and the inflow air of the second air inlet 202 intersect is reduced, and the frost caused by different temperatures is decreased, the time interval between two defrosting operations is prolonged, and the power consumption of defrosting is saved.

The structure of the branch portion may be referred to FIG. 21 to FIG. 38.

The branch portion is a first inner recess 2121 provided at the partition component 210, the first inner recess 2121 is recessed toward the inner side of the partition component 210, the first inner recess 2121 is suitable for guiding part of the inflow air of the first air inlet 201 to be branched into the first inner recess 2121, and the first air inlet 201 is at least located at one of the left side and the right side of the first cavity body 282.

The air duct assembly 200 further comprises an evaporator 230 provided in the first cavity body 282, the evaporator 230 comprises a heat exchange tube 233 and a heat dissipation fin 234. The heat dissipation fin 234 comprises a first heat dissipation fin 2341 and a second heat dissipation fin 2342, the first heat dissipation fin 2341 is connected to the heat exchange tube 233, and multiple first heat dissipation fins 2341 form a first heat dissipation portion. The second heat dissipation fin 2342 is connected to the heat exchange tube 233, and the second heat dissipation fin 2342 is at least provided at one side of the first heat dissipation portion. The branch portion is a ventilation portion 23421 provided at the second heat dissipation fin 2342, the projection of the first heat dissipation fin 2341 at the second heat dissipation fin 2342 covers the ventilation portion 23421, the projection of the first air inlet 201 at the second heat dissipation fin 2342 covers the ventilation portion 23421, both the first heat dissipation fin 2341 and the second heat dissipation fin 2342 extend from the second side to the third side, and the third side is the side where the exhaust port is located. The specific implementation and effect of the ventilation part 23421 may refer to the embodiments of the evaporator 230 mentioned above, which is repeated here.

The included angle between the evaporator 230 and the horizontal direction is less than or equal to a preset angle, the evaporator 230 is provided horizontally and its downward tilt angle may be less than or equal to 7°. The space occupied by the evaporator 230 in the height direction is reduced, and the height of the air duct assembly 200 is also reduced, which helps to increase the space of the refrigeration apparatus.

The partition component 210, the air duct component 220, the first drain component 260, the second drain component 290, the fan 270, the fan hood 240, the drain plate 100, the evaporator 230 and other components may all adopt the structures in the above embodiment, which are not repeated here.

In combination with FIG. 1 to FIG. 25, the air duct assembly 200 comprises a partition component 210, an air duct component 220, an evaporator 230 and a drain plate 100. The air duct component 220 is located below the partition component 210, and the partition component 210 and the air duct component 220 are provided with a first cavity body 282, an air inlet and an exhaust port that communicate with each other. The evaporator 230 is provided in the first cavity body 282, and the included angle between the evaporator 230 and the horizontal direction is less than or equal to a preset angle. The drain plate 100 is provided in the first cavity body 282, the drain plate 100 is located below the evaporator 230, the drain plate 100 is provided with an outlet 114 and a water guide portion that is recessed relative to the top surface of the drain plate 100, the water guide portion communicates with the outlet 114, and a fourth included angle is formed between the extension direction of the water guide portion and the direction from the air inlet to the exhaust port. The heat member 160 is provided at the surface of the drain plate 100. The height occupied by the evaporator 230 may be reduced by placing the evaporator 230 horizontally in the air duct assembly 200 and controlling the downward tilt angle of the evaporator 230 relative to the horizontal direction within the preset angle, and the height of the air duct assembly 200 may be reduced by the evaporator 230. The drain plate 100 is provided with a water guide portion, which meets the drainage requirements and the requirements of air supply and heat exchange, ensuring that the air in the first cavity body 282 is discharged after sufficient heat exchange with the evaporator 230. The drain plate 100 with a water guide portion cooperates with the evaporator 230 to reduce the tilt angle of the evaporator 230. The height occupied by the heating and defrosting structure may be saved by providing the heat member 160 at the drain plate 100, which further reduces the height of the air duct assembly 200.

In combination with the above, the evaporator 230, the drain plate 100 and the heat member 160 cooperate to fully reduce the height of the air duct assembly 200.

The heat member 160 covers the lower surface of the drain plate 100, which may prevent the heat member 160 from directly contacting the defrosted water received above the drain plate 100, and safety hazards is reduced.

The partition component 210, the air duct component 220, the first drain component 260, the second drain component 290, the fan 270, the fan hood 240, the drain plate 100, the heat member 160, the evaporator 230 and other components may all adopt the structures in the above-mentioned embodiments, which are not repeated here.

When the air duct assembly 200 in the above-mentioned embodiments is applied to the box liner and the refrigeration apparatus, the box liner and the refrigeration apparatus have the above-mentioned beneficial effects.

The structure of the box liner is described in combination with the above-mentioned air duct assembly as follows.

The box liner comprises a box liner body 300 and an air duct assembly 200 provided in the box liner body 300, and the air duct assembly 200 divides the space in the box liner body 300 into a first compartment 410 and a second compartment 420.

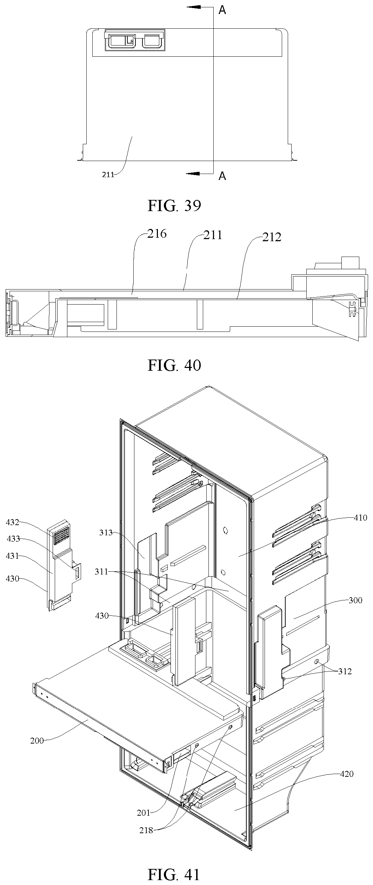

As shown in FIG. 39 to FIG. 41, the box liner body 300 is provided with first channels 312, a cavity 216 is formed inside the partition component 210, second channels 218 are provided on the side of the partition component 210, the first channels 312 are in one-to-one correspondence with the second channels 218, and the cavity 216 and the second channels 218 communicate with the first channels 312.

In an embodiment, the second channels 218 may be provided at the side of the second plate body 212, or at the side of the first plate body 211.

By providing the first channels 312 at the box liner body 300 and providing the second channels 218 at the side of the partition component 210, after the partition component 210 is mounted in the box liner body 300, the first channels 312 and the second channels 218 cooperate to form a polystyrene foam channel for the polystyrene foam to enter the cavity 216, and the partition component 210 may be foamed together with the box liner body 300. The evaporator 230, the air duct component 220 and the drain plate 100 and other components may be pre-assembled at the partition component 210 to form the air duct assembly 200 before foaming, and then the air duct assembly 200 is mounted in the box liner body 300 for foaming together, which adopts a modular mounting mode. Compared with the mounting mode in the related art, the mounting steps are effectively simplified, the mounting time is shortened, and the production efficiency is improved.

When the box liner is applied to a refrigeration apparatus, the cabinet of the refrigeration apparatus comprises a box liner body 300, the box liner body 300 is provided with a first channel 312, a cavity 216 is formed inside the partition component, and a second channel 218 is provided on the side of the partition component. The second channel 218 and the cavity 216 communicate with the first channel 312 to form foam space, the air duct assembly and the box liner body 300 are integrally foam molded, and the hermetic performance of the connection part of the air duct assembly 200 is ensured.

The cabinet 400 of the refrigeration apparatus comprises a housing provided outside the box liner body 300, a foam cavity is formed between the housing and the box liner body 300, the box liner body is provided with a first channel 312, a cavity 216 is formed inside the partition component 210, and a second channel 218 is provided at the side of the partition component. The foam cavity, the second channel 218, the cavity 216 and the first channel 312 communicate to form foam space, and the air duct assembly and the cabinet are integrally foam molded, which simplifies the processing process.

In the embodiment of the present application, the partition component 210 is provided with a recess 217 communicating with the cavity 216, the recess 217 communicates with the second channel 218, and the recess 217 is provided at the periphery of the cavity 216. The polystyrene foam first passes through the second channel 218 to enter the recess 217, and then enters the gap from different directions through the recess 217, the polystyrene foam quickly fills the entire gap to form a first thermal insulation layer 213, the foaming time is shortened, and the foaming efficiency is improved.

When the partition component 210 comprises a first plate body 211 and a second plate body 212, the edge of the second plate body 212 is recessed downwardly to form a recess 217 communicating with the cavity 216, and the recess 217 is U-shaped. The side of the second plate body 212 is provided with a through hole communicating with the recess 217, that is, a second channel 218. The bottom of the second plate body 212 is provided with a groove, the gap between the middle of the second plate body 212 and the first plate body 211 is small, and the speed at which the polystyrene foam enters the gap during the foaming process is slow. By providing the recess 217 at the edge of the second plate body 212, the polystyrene foam first passes through the second channel 218 to enter the recess 217, and then enters the gap from different directions through the recess 217, the polystyrene foam quickly fills the entire gap to form the first thermal insulation layer 213, which shortens the foaming time and improves the foaming efficiency.

As shown in FIG. 41, the box liner body 300 is provided with a snap slot 311, the side of the partition component 210 is snap-connected to the snap slot 311, and the first channel 312 is a through hole provided in the snap slot 311. During mounting, it is only necessary to snap-connect the side of the partition component 210 to the snap slot 311, and then foam the partition component 210 and the box liner body 300 together to mount the air duct assembly 200, which effectively simplifies the mounting steps, shortens the mounting time, and improves work efficiency.

In an embodiment, the second channel 218 and the first channel 312 are both in the form of through holes, and they may also be in the form of strip-shaped gaps. The specific structural form of the mounting structure is not limited to the snap slot 311, and buckles or other connection structures may also be used.

In an embodiment of the present application, as shown in FIG. 41, the box liner of refrigeration apparatus further comprises an air return component 430, and the air return component 430 is provided at the inner wall of the first compartment 410 and communicates with the first air inlet 201. When the fan 270 is started, the air in the first compartment 410 enters the first cavity body 282 through the air return component 430 to exchange heat with the evaporator 230, and the temperature of the air is reduced to become cold air, and the cold air then enters the first compartment 410 and the second compartment 420 through the first exhaust port 203 and the second exhaust port 204 respectively.

By providing the air return component 430 at the inner wall of the first compartment 410, it is convenient to maintain the air return component 430, the influence of the foaming process on the air return component 430 is avoided, the mounting steps of the refrigeration apparatus simplified, and the production efficiency is improved. Since the air return component 430 is located in the first compartment 410, the space between the box liner body 300 and the housing is reduced, the storage space of the box liner body 300 is increased, and the capacity of the box liner body 300 is effectively increased.

As shown in FIG. 41, the air return component 430 comprises an air return pipe 431, and the inner wall of the first compartment 410 is provided with a position groove 313, the air return pipe 431 is embedded in the corresponding position groove 313, and the air outlet of the air return pipe 431 communicates with the corresponding first air inlet 201.

The space occupied by the air return component 430 is reduced by embedding the air return pipe 431 in the position groove 313, which helps to increase the storage space of the refrigeration apparatus, and provide a large-capacity refrigeration apparatus.

The air outlet of the air return pipe 431 is detachably connected to the first air inlet 201. By detachably connecting the air outlet of the air return pipe 431 to the first air inlet 201, the shape and size of the first air inlet 201 are matched with the shape and size of the air outlet of the air return component 430. The first air inlet 201 may be provided at the side of the first plate body 211, or on the side of the second plate body 212.

As shown in FIG. 41, the air return pipe 431 is provided along the up-down direction, the upper end of the air return pipe 431 is formed with a main air return outlet 432 communicating with the air outlet of the air return pipe 431, and one side of the air return pipe 431 is formed with an auxiliary air return outlet 433 communicating with the air outlet of the air return pipe 431.

The air return component 430 comprises two air return pipes 431, the left side wall and the right side wall of the first compartment 410 are respectively provided with position grooves 313 extending up and down, the position grooves 313 are respectively located on the side of the left side wall and the right side wall close to the door body, and the two air return pipes 431 are respectively embedded in the corresponding position grooves 313.

Since the temperature of the cold air near the door body is the highest, the air return component 430 may return the cold air near the door body through the air return component 430 to the first cavity body 282 for heat exchange by providing the air return component 430 at the side of the inner wall close to the door body, which effectively prevents the cold air of the exhaust port from directly entering the air return component 430, and improves the cooling efficiency of the refrigeration apparatus.

In combination with the above-mentioned air duct assembly, an implementation mode of the refrigeration apparatus is provided below.

The refrigeration apparatus comprises a cabinet and an air duct assembly. The air duct assembly is located in the cabinet and divides the cabinet into a first compartment and a second compartment. The air duct assembly comprises a partition component, an air duct component, an evaporator and a drain plate. The partition component and the air duct component form a first cavity, a first air inlet, a second air inlet, a first exhaust port and a second exhaust port. The first air inlet, the first cavity, the first exhaust port and the first compartment are capable for communication. The second air inlet, the first cavity, the second exhaust port and the second compartment are capable for communication. The evaporator and the drain plate are provided in the first cavity, the air duct component supports the drain plate, the drain plate is located below the evaporator, the included angle between the evaporator and the horizontal plane is less than or equal to a preset angle, or the evaporator is parallel to the horizontal plane. The evaporator is provided horizontally in the air duct assembly, and the angle of the evaporator inclined downward relative to the horizontal plane may be controlled within a preset angle, or the evaporator may be provided horizontally, which may reduce the height space occupied by the evaporator, reduce the overall height of the air duct assembly, reduce the space occupied by the air duct assembly in the cabinet, increase the storage space in the cabinet accordingly, and provide a large-capacity refrigeration apparatus.

In some cases, the first compartment is located above the second compartment, the first compartment is a refrigeration compartment, and the second compartment is a freezer compartment.

The first air inlets are located on the left and right sides of the air duct assembly and close to the front side of the air duct assembly, and the first air inlets communicate with the first compartment above the air duct assembly. The second air inlet is located on the front side of the air duct assembly, and the second air inlet communicates with the second compartment below the air duct assembly.

The drain plate may be one or more of the above structures, and the details may be referred to the above content, which is not repeated here. The drainage structure of the air duct assembly may be the above-mentioned drainage structures, such as the first drain component for side drainage, the second drain component for rear drainage, or the water guide portion 223 for drainage, or a combination of multiple drainage modes.

The air duct assembly further comprises a fan 270, which is provided at one side of the evaporator. The fan 270 may be provided horizontally or vertically, and the details may be referred to the above description of the fan 270. The air duct assembly 200 further comprises a fan hood, a fan cover plate 243 and other structures used in conjunction with the fan, which may also be referred to the above content and is not repeated here.

The box liner body 300, the partition component 210, the air duct component 220 and other structures may all be referred to the above content and are not repeated here.

The above embodiments are only used to explain the solutions of the present application, and are not limited thereto. Although the present application has been described in detail with reference to the foregoing embodiments, it should be understood by those skilled in the art that various combinations, modifications or equivalent replacements of the technical solutions of the present application do not depart from the scope of the solutions of the present application, and should be comprised in the scope of the claims of the present application.

## Claims

1. A refrigeration apparatus, comprising:
a cabinet; and
an air duct assembly, wherein the air duct assembly is located in the cabinet and divides the cabinet into a first compartment and a second compartment, the air duct assembly comprises a partition component, an air duct component, an evaporator and a drain plate, the partition component and the air duct component form a first cavity body, a first air inlet, a second air inlet, a first exhaust port and a second exhaust port,
wherein the first air inlet, the first cavity body, the first exhaust port and the first compartment are capable for communication, the second air inlet, the first cavity body, the second exhaust port and the second compartment are capable for communication; the evaporator and the drain plate are provided in the first cavity body, the air duct component supports the drain plate, and an included angle between the evaporator and a horizontal plane is less than or equal to a preset angle; or the evaporator is parallel to a horizontal plane.

2. The refrigeration apparatus of claim 1, wherein the drain plate is provided with a water guide portion recessed downwardly relative to a top surface of the drain plate, and a fourth included angle is formed between an extension direction of the water guide portion and an air outflow direction of the air duct assembly.

3. The refrigeration apparatus of claim 2, wherein the drain plate is provided with a drain portion recessed downwardly relative to the top surface of the drain plate, the drain portion is provided with an outlet, and the drain portion communicates with the water guide portion.

4. The refrigeration apparatus of claim 3, wherein a bottom of the water guide portion is inclined in a first direction toward the drain portion, a sixth included angle is formed between the first direction and the top surface of the drain plate, and a depth of the water guide portion recessing toward the drain portion gradually increases.

5. The refrigeration apparatus of claim 3, wherein a bottom of the drain portion is inclined in a second direction toward the outlet, a seventh included angle is formed between the second direction and the top surface of the drain plate, and a depth of the drain portion recessing toward the outlet gradually increases.

6. The refrigeration apparatus of claim 2, wherein the water guide portion extends to an end of the drain plate and forms an opening, and a first drain component is provided at a side where the opening is located.

7. The refrigeration apparatus of claim 1, further comprising a fan, wherein a first included angle is formed between a rotation axis of the fan and a vertical direction.

8. The refrigeration apparatus of claim 1, further comprising a fan and a fan cover plate, wherein the fan is provided at a side of the evaporator, the fan cover plate is located between the fan and the evaporator, an inlet of the fan communicates with the first cavity body through a vent opening of the fan cover plate, and the fan cover plate is provided with the first exhaust port and the second exhaust port.

9. The refrigeration apparatus of claim 1, wherein the cabinet comprises a box liner body, the box liner body is provided with a first channel, a cavity is formed inside the partition component, a second channel is provided at a side of the partition component, wherein the second channel and the cavity communicate with the first channel.

10. The refrigeration apparatus of claim 9, wherein the partition component comprises:
a first plate body; and
a second plate body, wherein the second plate body is provided below the first plate body, the second plate body and the first plate body enclose the cavity, an edge of the second plate body is recessed downwardly to form a recess communicating with the cavity, and the recess communicates with the second channel.

11. The refrigeration apparatus of any of claims 1 to 10, wherein at least one of the partition component and the air duct component is provided with a partition portion, and an orthographic projection of the partition portion on the first air inlet covers a local area of the first air inlet, the orthographic projection is located at an end of the first air inlet close to the second air inlet, and the partition portion is spaced from the first air inlet by a preset distance.

12. The refrigeration apparatus of any of claims 1 to 10, wherein the second air inlet is provided at a front side of the air duct component, and a front side of the partition component is provided with a mount portion shielding the second air inlet.

13. The refrigeration apparatus of any of claims 1 to 10, wherein the first air inlets are provided at a left side and a right side of the air duct assembly and close to a front side of the air duct assembly.

14. The refrigeration apparatus of any of claims 1 to 10, wherein the first compartment is located above the second compartment, the first compartment is a refrigeration compartment, and the second compartment is a freezer compartment.
